# EUROPEAN PATENT SPECIFICATION

(11) **EP 2 697 451 B1**
(45) Date of publication and mention of the grant of the patent: **06.06.2018**
(21) Application number: 12716647.8
(22) Date of filing: 16.04.2012
(51) Int. Cl.: E04F 13/18, B27F 1/04, B29C 44/20, B29C 47/00, B29C 67/00, B29C 69/02, B27N 3/08, E04F 15/02

(54) **A METHOD AND AN APPARATUS FOR PRODUCING AN ELONGATED ELEMENT FROM AN ELONGATED MEMBER**
VERFAHREN UND VORRICHTUNG ZUR HERSTELLUNG EINES LÄNGLICHEN ELEMENTS AUS EINEM LÄNGLICHEN ELEMENT
PROCÉDÉ POUR PRODUIRE UN ÉLÉMENT ALLONGÉ À PARTIR D'UN ÉLÉMENT ALLONGÉ, ET ÉLÉMENT ALLONGÉ PRODUIT PAR LE PROCÉDÉ

(30) Priority: 14.04.2011 IE 20110184; 08.02.2012 IE 20120056
(43) Date of publication of application: 19.02.2014
(73) Proprietor: Xeltek Limited, Cork (IE)
(72) Inventor: WALSH, Anthony, County Cork (IE)
(74) Representative: Gorman, Francis Fergus
(86) International application number: PCT/IE2012/000019
(87) International publication number: WO 2012/140638

(56) References cited:
- EP-A1- 0 082 887
- EP-A1- 0 082 887
- EP-A2- 2 031 147
- EP-A2- 2 031 147
- EP-A2- 2 180 116
- EP-A2- 2 180 116
- WO-A1-03/078761
- WO-A1-03/078761
- WO-A2-2011/005658
- WO-A2-2011/005658
- CA-A1- 2 748 329
- CA-A1- 2 748 329
- DE-U1-202007 013 379
- DE-U1-202007 013 379
- GB-A- 1 166 954
- GB-A- 1 166 954
- GB-A- 1 359 483
- GB-A- 1 359 483
- US-A- 5 016 416
- US-A- 5 016 416
- US-A- 5 224 318
- US-A- 5 224 318
- US-A1- 2007 022 694
- US-A1- 2007 022 694
- US-A1- 2008 295 431
- US-A1- 2008 295 431

## Description

The present invention relates to a method for producing an elongated element from an elongated member, and in particular, though not limited to a method for sequentially producing a plurality of elongated elements, such as, for example, cladding planks sequentially from an elongated member, for example, an extruded elongated member of plastics material.

Cladding planks of plastics material are commonly used for cladding the exterior walls of houses, buildings and the like. Such cladding planks may be of the type which are commonly referred to as lap planks whereby the cladding planks overlap each other, each upper cladding plank overlapping an adjacent lower cladding plank, or the cladding planks may be of the type whereby each cladding plank is provided with a longitudinally extending tongue and a groove on respective opposite longitudinally extending opposite side edges of the plank, so that each upper cladding plank is engaged with its adjacent lower cladding plank by a longitudinally extending tongue and groove joint. In general, such cladding planks of plastics material are extruded with a body member or core of an expanded plastics material and an outer skin of unexpanded plastics material. The outer skin of plastics material extends at least over the major surface of the cladding plank which in use forms the outer major surface of the cladding plank. The outer skin of the cladding plank may be of a different colour to that of the expanded plastics material of the body member or core of the cladding plank.

However, cladding planks, including lap planks and other planks and elongated elements must be capable of being joined end-to-end, and various jointing means for jointing such planks end-to-end are provided. In such planks in which the expanded core and the unexpanded outer skin are provided in different colours, cut ends of the planks are liable to display the core colour rather than the colour of the outer skin. This is undesirable and in particular is aesthetically undesirable. A further problem in joining such planks is that it is difficult to protect against wind and water penetrating through such end joints. In general, known methods for joining such planks end-to-end, so that cut ends are not exposed and wind and water penetration is minimised require obtrusive covers for the joints, the use of fillers, or caulking, which are equally displeasing in appearance.

In PCT Published Application Specification No. WO 2007/031527 of Deweerdt, a method is disclosed for joining cladding planks in end-to-end abutting relationship with each other. However, the methods described in the PCT specification for producing the cladding planks with end joints are rather cumbersome, and is time consuming.

There is therefore a need for a method for producing a cladding plank and other planks and elongated elements, which addresses at least some of the problems of known cladding planks.

U.S. Patent Specification No. 5,016,416 of Munk discloses an elongated cover profile, for example, a cladding plank for a building which is formed by pressing and comprises an elongated longitudinally extending tongue extending along one longitudinally extending side edge of the cladding plank, and an elongated longitudinally extending groove extending longitudinally along the opposite longitudinally extending side edge of the plank. The longitudinally extending tongue is formed by pressing, while the longitudinally extending groove is formed by machining.

European Patent Specification No. 0,082,887 A1 of Munk discloses an elongated cladding plank which is provided with transversely extending grooves. The plank and the grooves are formed by pressing.

PCT Specification No. WO 2011/005658 A2 of Mittag discloses a method for forming a plank of foamed polymer material by extrusion or in a pour-in-place mould. The plank comprises trimming the plank after its formation by extrusion or moulding, and then placing the plank in a press to form the plank of a desired cross-section. European Specification No. 2,180,116 A2 of Fröhlich discloses a method for producing a floor panel from recycled PVC material by injection moulding. After moulding sprue is cut off from the panel, and the underside of the panel is machined to bring the panel to the required thickness. Tongues are formed on two adjacent side edges of the panel during the injection moulding process, and grooves are formed by milling on the opposite side edges of the panel to those on which the tongues are formed.

The present invention is directed towards providing a method for producing a cladding plank, and the invention is also directed towards providing a method for producing an elongated element from an elongated member, and the invention is also directed towards providing a method for sequentially producing a plurality of elongated elements from an elongated member.

According to the invention there is provided a method for producing an elongated element from an elongated member of plastics material, the elongated element to comprise a tongue extending outwardly longitudinally from one end of the elongated element and transversely across the elongated element, the elongated member having opposite first and second primary major surfaces defining respective spaced apart first and second primary planes, wherein the method comprises urging a die of a press tool into engagement with the first primary major surface of the elongated member, the die extending transversely of the elongated member for displacing a portion of the first primary major surface of the elongated member out of the first primary plane inwardly into the elongated member adjacent a location at which the tongue is to be formed to form a first secondary major surface spaced apart from the first primary plane, and forming an undercut in the elongated member from the second primary major surface adjacent the location at which the tongue is to be formed by machining a portion of the elongated member adjacent the location at which the tongue is to be formed to a depth from the second primary major surface to form a second secondary major surface spaced apart from the first secondary major surface with the tongue defined between the first and second secondary major surfaces.

Preferably, the tongue extends the width of the elongated element. Preferably, the elongated member defines a longitudinally extending central axis, and the tongue extends perpendicularly to the central axis of the elongated member.

In another aspect of the invention the second primary major surface of the elongated member is supported on an anvil of the press tool so that during displacing of the portion of the first primary major surface inwardly into the elongated member, a portion of the second primary major surface aligned with the portion of the first primary major surface being displaced is displaced outwardly of the elongated member through the second primary plane.

In one embodiment of the invention the first primary major surface of the elongated member transitions to the first secondary major surface of the displaced portion through an intermediate surface adjacent at least one end of the displaced portion of the first primary major surface. Preferably, the first primary major surface of the elongated member transitions to the first secondary major surface at both ends thereof through respective intermediate surfaces. Advantageously, each intermediate surface defines a convex surface adjacent the first primary major surface of the elongated member. Preferably, each intermediate surface defines a concave surface adjacent the first secondary major surface. Advantageously, a portion of the die adjacent a face thereof which is adapted for abutting the first primary major surface of the elongated member is shaped to form one of the intermediate surfaces during displacing of the portion of the first primary major surface inwardly into the elongated member. Ideally, opposite portions of the die adjacent the face thereof which is adapted for abutting the first primary major surface are shaped to form the respective intermediate surfaces during displacing of the portion of the first primary major surface inwardly into the elongated member.

In one aspect of the invention the elongated element is parted off from the elongated member adjacent the tongue. Preferably, the elongated element with the tongue formed thereon is parted off from the elongated member. Advantageously, the elongated element is parted off from the elongated member along a cut line extending along the tongue intermediate the elongated element and the elongated member. Preferably, the elongated element is parted off from the elongated member along the cut line adjacent the elongated member. Ideally, the elongated element is parted off from the elongated member simultaneously during forming of the undercut into the elongated member from the second primary major surface.

Preferably, the undercut is formed in the elongated member from the second primary major surface thereof by a milling cutter. Preferably, the milling cutter is adapted to traverse along a path adjacent the location where the tongue is to be formed to form the undercut in the elongated member from the second primary major surface. Advantageously, the milling cutter is adapted to traverse along a path transversely across the elongated member to form the undercut therein from the second primary major surface. Preferably, the milling cutter comprises a parting off tool driven about a common rotational axis with the milling cutter, the diameter of the parting off tool being greater than the diameter of the milling cutter for parting off the elongated element from the elongated member during forming of the undercut into the elongated member from the second primary major surface.

In another aspect of the invention the first and second primary planes extend substantially parallel to each other.

Preferably, the first secondary major surface defines a first secondary plane. Advantageously, the first secondary plane extends intermediate the first and second primary planes. Preferably, the first secondary plane is spaced apart from the first primary plane. Preferably, the first secondary plane extends substantially parallel to the first primary plane.

In one aspect of the invention the second secondary major surface defines a second secondary plane. Preferably, the second secondary plane is spaced apart from the second primary plane. Advantageously, the second secondary plane extends intermediate the first and second primary planes.

Preferably, the first and second secondary planes extend substantially parallel to each other.

In another aspect of the invention the first secondary plane defined by the first secondary major surface is inclined to the first primary plane.

In one embodiment of the invention the first secondary plane defined by the first secondary major surface is inclined to the first primary plane at an angle in the range of 5° to 70°. Preferably, the first secondary plane defined by the first secondary major surface is inclined to the first primary plane at an angle in the range of 15° to 45°. Advantageously, the first secondary plane defined by the first secondary major surface is inclined to the first primary plane at an angle of approximately 35°.

In another aspect of the invention the thickness of the tongue between the first and second secondary major surfaces lies in the range of 10% to 70% of the thickness of the elongated member adjacent the tongue. Preferably, the thickness of the tongue between the first and second secondary major surfaces lies in the range of 30% to 60% of the thickness of the elongated member adjacent the tongue. Advantageously, the thickness of the tongue between the first and second secondary major surfaces is in the order of 40% of the thickness of the elongated member adjacent the tongue.

In a further aspect of the invention the tongue is formed to extend longitudinally from the adjacent end of the elongated element. Preferably, the length of the tongue extending in a longitudinal direction from the elongated element lies in the range of 8mm to 25mm. Advantageously, the length of the tongue extending in a longitudinal direction from the elongated element lies in the range of 10mm to 18mm. Ideally, the length of the tongue extending in a longitudinal direction from the elongated element is approximately 13mm.

In another embodiment of the invention the elongated member comprises an expanded plastics material, having an outer skin of an unexpanded plastics material defining the first major surface of the elongated member.

In one aspect of the invention the outer skin of unexpanded plastics material extends around longitudinally extending side edges of the elongated member between which the first and second primary major surfaces extend.

In another aspect of the invention the outer skin of unexpanded plastics material defines the first secondary major surface of the tongue.

Preferably, the outer skin of unexpanded plastics material defines each intermediate surface through which the first primary major surface of the elongated member transition to the first secondary major surface of the tongue.

In one aspect of the invention the tongue comprises a portion of the outer skin.

In a further aspect of the invention the outer skin of unexpanded plastics material is of thickness lying in the range of 0.4mm to 2mm. Preferably, the outer skin of unexpanded plastics material is of thickness lying in the range of 0.5mm to 1.2mm. Advantageously, the outer skin of unexpanded plastics material is of thickness of approximately 0.6mm.

In one embodiment of the invention the elongated member is clamped between a pair of clamping jaws during displacing of the portion of the first primary surface of the elongated member inwardly into the elongated member to form the first secondary major surface. Preferably, the elongated member is clamped between the pair of clamping jaws during forming of the undercut in the elongated member from the second primary major surface.

In one embodiment of the invention the tongue forms one of a pair of interengageable complementary formations, the other of the pair of interengageable complementary formations being located adjacent the end of the elongated element opposite to the end thereof from which the tongue extends, the interengageable complementary formations being configured on the elongated element so that when the elongated element is joined end-to-end at its respective ends to two other similar elongated elements, the tongue of the elongated element engages the other interengageable complementary formation on the adjacent end of one of the other similar elongated elements and the other interengageable complementary formation of the elongated element engages the tongue on the adjacent end of the other one of the other similar elongated elements.

In another aspect of the invention the pair of interengageable complementary formations of the elongated element is configured, so that when the elongated element is joined end-to-end at its respective opposite ends to two similar elongated elements, with the tongue and the other interengageable complementary formation of the elongated element engaging the other interengageable complementary formation and the tongue, respectively, of the respective other similar elongated elements, the first primary planes defined by the first primary major surfaces of the respective elongated elements coincide.

In a further aspect of the invention the pair of interengageable complementary formations is configured on the elongated element, so that when the elongated element is joined end-to-end at its respective opposite ends to two similar elongated elements with the tongue and the other interengageable complementary formation of the elongated element engaging the other complementary interengageable formation and the tongue, respectively, of the respective other similar elongated elements, the second primary planes defined by the second primary major surfaces of the respective elongated elements coincide.

In one aspect of the invention the other interengageable complementary formation of the elongated element comprises a groove extending into the elongated element from the end of the elongated element opposite to the end thereof from which the tongue extends.

Preferably, the groove extends into the elongated element and extends transversely thereof. Advantageously, the groove extends the width of the elongated element. Preferably, the groove is formed in the elongated element prior to forming the tongue therein.

In an alternative embodiment of the invention the other interengageable complementary formation of the elongated element comprises a recess extending into the elongated element from the first primary major surface thereof adjacent the end of the elongated element opposite to the end thereof from which the tongue extends.

In one aspect of the invention the recess extends transversely of the elongated element. Preferably, the recess extends the width of the elongated element. Advantageously, the recess is formed in the elongated element prior to forming the tongue therein.

In another aspect of the invention the method is configured for sequentially producing a plurality of elongated elements from an elongated member having opposite first and second primary major surfaces defining respective first and second primary planes, each elongated element terminating at its opposite ends in respective ones of a pair of interengageable complementary formations, so that when the elongated elements are in end-to-end abutting engagement with each other the interengageable complementary formations on adjacent ends of the elongated elements interengage with each other, the method comprising forming a pair of the interengageable complementary formations on the elongated member intermediate the elongated member and a portion of the elongated member to form the next to be formed elongated element, so that when each elongated element is parted off from the elongated member, each elongated element comprises one of the pair of interengageable complementary formations formed adjacent one end of the elongated element and the other one of the pair of interengageable complementary formations formed adjacent the other end of the elongated element.

In one embodiment of the invention the pair of interengageable complementary formations which are formed on the elongated member intermediate the elongated member and the next to be formed elongated element are formed adjacent each other.

Advantageously, the next to be formed elongated element is parted off from the elongated member adjacent the last to be formed of the pair of the interengageable complementary formations formed on the elongated element.

In another aspect of the invention the elongated member is advanced through the die along a path of advance, and the die comprises an elongated die extending transversely of the path of advance.

Preferably, the die is urged into engagement with the first primary major surface of the elongated member to form an indent in the first primary major surface of the elongated member extending transversely thereof for displacing the portion of the first major surface inwardly into the elongated member.

Advantageously, the second primary major surface of the elongated member is supported on an anvil of the press tool so that during forming of the indent in the first primary major surface, a portion of the second primary major surface aligned with the indent in the first primary major surface is displaced outwardly of the elongated member through the second primary plane.

In one aspect of the invention the first primary major surface of the elongated member transitions to the indent through an intermediate surface on at least one end of the indent. Preferably, the first primary major surface of the elongated member transitions to the indent at both ends thereof through respective intermediate surfaces. Preferably, each intermediate surface defines a convex surface adjacent the first secondary major surface formed by the indent. Advantageously, each intermediate surface defines a concave surface adjacent the first secondary major surface formed by the indent. Preferably, a portion of the die adjacent a face thereof which is adapted for forming the indent in the first primary major surface is shaped to form at least one of the intermediate surfaces during forming of the indent in the first primary major surface of the elongated member. Advantageously, opposite portions of the die adjacent a face thereof which is adapted for forming the indent in the first primary major surface are shaped to form the respective intermediate surfaces during forming of the indent in the first primary major surface of the elongated member.

In one embodiment of the invention the next to be formed elongated element is parted off from the elongated member adjacent the indent. Preferably, the next to be formed elongated element is parted off from the elongated member along a cut line extending along the indent intermediate the next to be formed elongated element and the elongated member.

In one aspect of the invention the next to be formed elongated element is parted off from the elongated member along the cut line adjacent the intermediate which is adjacent the elongated member, so that the tongue formed by the just formed indent forms the tongue of the elongated element being parted off from the elongated member.

In one embodiment of the invention the next to be formed elongated element is parted off from the elongated member simultaneously during forming of the undercut in the elongated member from the second primary major surface.

Advantageously, the first milling cutter is traversed along a path extending transversely of the path of advance of the elongated member to form the undercut in the elongated member from the second primary major surface thereof. Preferably, the first milling cutter comprises a parting off tool being driven about a common rotational axis with the first milling cutter, the diameter of the parting off tool being greater than the diameter of the first milling cutter for parting off the next to be formed elongated element from the elongated member during forming of the undercut into the elongated member to form the second secondary major surface of the tongue of the elongated element being parted off.

In another embodiment of the invention the indent is formed in the elongated member prior to forming the undercut therein.

In one embodiment of the invention the other one of the interengageable complementary formations of each pair of interengageable complementary formations comprises a groove extending into the corresponding elongated element from the other end thereof. Preferably, each groove is formed in the elongated member subsequent to parting off the just formed elongated element, so that each groove formed in the elongated member forms the groove of the next to be formed elongated element. Advantageously, each groove is formed in the elongated member to extend substantially transversely across the elongated member. Ideally, each groove is formed in the elongated member to extend substantially perpendicularly relative to the main central axis of the elongated member.

In one aspect of the invention each groove is formed in the elongated member to extend into the elongated member in a longitudinal direction to a depth lying in the range of 8mm to 25mm.

Preferably, each groove is formed in the elongated member to extend into the elongated member in a longitudinal direction to a depth of approximately 15mm.

In another aspect of the invention the width of each groove lies in the range of 10% to 70% of the thickness of the elongated member adjacent the groove. Preferably, the width of each groove is approximately 45% of the thickness of the elongated member adjacent the groove.

Preferably, each groove extends the width of the elongated member.

In one aspect of the invention each groove is formed in the elongated member adjacent the corresponding intermediate surface of the corresponding indent, so that the intermediate surface extends from the first primary major surface substantially to the groove. Preferably, the intermediate surface extends to the corresponding groove.

In another aspect of the invention each groove is formed by a second milling cutter. Preferably, the second milling cutter for forming the grooves is adapted to traverse along a path extending transversely of the path of advance of the elongated member for forming each groove in the elongated member.

In an alternative embodiment of the invention the other one of the interengageable complementary formations of each pair of the interengageable complementary formations comprises a recess extending into the first primary major surface of the corresponding elongated element.

In one aspect of the invention the recess in each elongated element is configured to be overlapped by the tongue of an adjacent elongated element in end-to-end abutting relationship therewith. Advantageously, each recess is formed in the elongated member to extend inwardly into the corresponding elongated element from the corresponding end thereof. Advantageously, each recess formed in the elongated member extends transversely across the elongated member. Advantageously, each recess formed in the elongated member extends substantially perpendicularly to the centre line of the elongated member. Ideally, each recess is formed by a portion of a corresponding one of the indents formed in the first primary major surface of the elongated member.

In one embodiment of the invention each indent formed in the first primary major surface of the elongated member is stepped and forms a step extending transversely across the elongated member, the portion of the stepped indent which is of greatest depth from the first primary plane being provided to form one of the recesses, and the other portion of the indent forming one of the tongues.

In another embodiment of the invention each elongated element is parted off from the elongated member adjacent the step in the corresponding stepped indent, so that the tongue formed by the stepped indent forms the tongue of the just parted off elongated element and the recess formed by the stepped indent forms the recess of the next to be formed elongated element.

Preferably, the face of the die adapted to form the indent is adapted to form the stepped indent.

In another embodiment of the invention the first secondary major surface of the tongue inclines inwardly from the first primary plane defined by the first primary major surface of the elongated member.

In one aspect of the invention the first secondary major surface of the tongue inclines inwardly from the first primary plane defined by the first primary major surface of the elongated member at an angle in the range of 15° to 70°. Preferably, the first secondary major surface of the tongue inclines inwardly from the first primary plane defined by the first primary major surface of the elongated member at an angle in the range of 25° to 50°. Advantageously, the first secondary major surface of the tongue inclines inwardly from the first primary plane defined by the first primary major surface of the elongated member at an angle of approximately 45°.

In one embodiment of the invention the elongated member is clamped between a pair of clamping jaws during formation of each indent in the first primary surface of the elongated member. Preferably, the elongated member is clamped between the pair of clamping jaws during formation of each undercut in the elongated member from the second primary major surface thereof.

In one aspect of the invention the die is located within one of the clamping jaws, and the elongated member is advanced along the path of advance through the clamping jaws after each indent into the first primary major surface of the elongated member has been formed, and is re-clamped between the clamping jaws with the just formed indent in the first primary major surface located externally of the clamping jaws, but adjacent thereto.

In another aspect of the invention the undercut is formed in the elongated member from the second secondary major surface while the elongated member is clamped between the clamping jaws with the indent in the first primary major surface located externally of the clamping jaws but adjacent thereto.

Preferably, the elongated element is parted off from the elongated member while the elongated member is clamped between the clamping jaws with the indent in the first primary major surface located externally of the clamping jaws but adjacent thereto. Advantageously, the elongated member is advanced through the clamping jaws along the path of advance after the just formed elongated element has been parted off to form the next elongated element.

In one aspect of the invention the interengageable complementary formations are configured on the elongated elements so that when the elongated elements are joined end-to-end with adjacent ones of the interengageable complementary formations of adjacent ones of the elongated elements interengaged, the first primary planes defined by the first primary major surfaces of the respective elongated elements coincide.

Preferably, the interengageable complementary formations are configured on the elongated element so that when the elongated elements are joined end-to-end with adjacent ones of the interengageable complementary formations of adjacent ones of the elongated elements interengaged, the second primary planes defined by the second primary major surfaces of the respective elongated elements coincide.

In one embodiment of the invention each elongated element comprises a cladding plank.

In a further aspect of the invention the method for sequentially forming a plurality of elongated elements from an elongated member having opposite first and second primary major surfaces defining respective first and second primary planes, each elongated element terminating in its opposite ends in respective similar coupling means, each coupling means being adapted to engage a connecting means for coupling a pair of the elongated elements in end-to-end relationship, the coupling means of two elongated elements being formed adjacent each other in the elongated member, and each elongated element being parted off from the elongated member intermediate the corresponding adjacent coupling means.

In one aspect of the invention the coupling means of the respective elongated elements are simultaneously formed adjacent each other in the elongated member. Preferably, each coupling means comprises a tongue extending from the corresponding end of the elongated element.

Preferably, the tongues of each pair of adjacently formed coupling means are formed by forming an indent in the first primary major surface of the elongated member extending transversely of the elongated member to form a first secondary major surface spaced apart inwardly from the first primary plane, and forming an undercut in the elongated member from the second primary major surface thereof to form a second secondary major surface spaced apart inwardly from the second primary plane, the first and second secondary major surfaces defining the respective tongues therebetween. Advantageously, the indent in the first primary major surface of the elongated member is formed by a die of a press tool.

In another aspect of the invention the second primary major surface of the elongated member is supported on an anvil of the press tool so that during formation of the indent in the first primary major surface of the elongated member, a portion of the second primary major surface aligned with the indent in the first primary major surface is displaced outwardly of the elongated member through the second primary plane.

In another aspect of the invention the first primary major surface of the elongated member transitions to the first secondary major surface formed by the indent through an intermediate surface on at least one end of the indent.

In a further aspect of the invention the first primary major surface of the elongated member transitions to the first secondary major surface at both ends of the indent through respective intermediate surfaces. Preferably, each intermediate surface defines a convex surface adjacent the first primary major surface of the elongated member. Advantageously, each intermediate surface defines a concave surface adjacent the first secondary major surface. Preferably, a portion of the die adjacent a face thereof which is adapted to form the indent into the first primary major surface of the elongated member is shaped to form at least one of the intermediate surfaces during forming of the indent into the first primary major surface of the elongated member. Advantageously, the portion of the die adjacent the face which is adapted to form the indent into the first primary major surface of the elongated member is shaped to form each of the intermediate surfaces during forming of the indent.

In one aspect of the invention each elongated element is parted off from the elongated member adjacent the corresponding indent. Preferably, each elongated element is parted off from the elongated member along a cut line extending along the indent intermediate the elongated element being parted off and the elongated member to form respective tongues with one of the respective tongues forming one of the tongues of the elongated element being parted off and the other of the respective tongues forming one of the tongues of the next to be formed elongated elements. Advantageously, each elongated element is parted off from the elongated member simultaneously during forming of the undercut in the elongated member from the second primary major surface thereof.

Preferably, each undercut is formed in the elongated member from the second primary major surface by a first milling cutter. Advantageously, the first milling cutter is adapted to traverse along a path extending transversely of the elongated member for forming the undercut.

In one aspect of the invention the first milling cutter comprises a parting off tool, both being driven about a common rotational axis, the diameter of the parting off tool being greater than the diameter of the first milling cutter for parting off each elongated element from the elongated member during forming of the undercut in the elongated member from the second primary major surface thereof.

In another aspect of the invention the tongues are formed in the elongated member so that the tongues extend transversely across each elongated element and extend longitudinally from the respective ends thereof.

In an alternative embodiment of the invention each coupling means comprises a groove extending into the corresponding end of the elongated element from the end thereof.

In another embodiment of the invention an indent is into the first primary major surface of the elongated member extending transversely across the elongated member, the indent being formed with intermediate surfaces extending from the first primary major surface of the elongated member into the indent.

In a further aspect of the invention each elongated element is parted off from the elongated member by removing the corresponding indented portion, and a pair of the grooves are simultaneously formed, one of the pair of simultaneously formed grooves being formed in the elongated member and the other one of the pair of simultaneously formed grooves being formed in the adjacent end of the just parted off elongated element.

In a further aspect of the invention each indent into the first primary major surface of the elongated member is formed by a die of a press tool.

In another aspect of the invention each indented portion of the elongated member from the first primary major surface is removed by machining. Preferably, each indented portion of the elongated member from the first primary major surface thereof is removed by a first milling cutter. Advantageously, the first milling cutter is adapted to traverse along a path extending transversely across the elongated member. Advantageously, the simultaneously formed grooves are formed by a second milling cutter. Preferably, the second milling cutter for simultaneously forming the grooves is adapted to traverse along a path extending transversely of the elongated member.

Preferably, each groove extends transversely across the corresponding end of the corresponding elongated element. Advantageously, each groove extends perpendicularly to the centre line of the corresponding elongated element. Advantageously, each groove is formed extending into the end of the corresponding one of,the elongated element or the elongated member adjacent the radiused portion which extends from the adjacent portion of the first primary major surface.

In another embodiment of the invention each just parted off elongated, element is clamped spaced apart from the elongated member with adjacent ends of the just parted off elongated element and the elongated member facing each other during simultaneous forming of the grooves in the facing ends of the elongated element and the elongated member.

Preferably, the elongated element is clamped during formation of the indent.

In one embodiment of the invention the portion of the elongated member adjacent the indent is removed for parting off the next to be formed of the elongated elements from the elongated member so that as the next to be formed elongated element is being parted off, the first end thereof is formed, and the second end of the elongated element to be subsequently formed is formed.

In one aspect of the invention the elongated element comprises a cladding plank.

In another aspect of the invention the elongated element comprises a lap plank.

The invention also provides an elongated element formed by any of the methods according to the invention.

In another aspect of the invention the elongated element extending longitudinally between spaced apart first and second ends and defining a first primary major surface, the first and second ends terminating in respective ones of a pair of interengageable complementary formations, so that when a plurality of the elongated elements are joined in end-to-end relationship, the interengageable complementary formations on the respective first and second ends of adjacent ones of the elongated elements interengage, the elongated element comprising an outer skin defining the first primary major surface of the elongated element, one of the interengageable complementary formations comprising a tongue extending longitudinally from the first end of the elongated element, the tongue comprising a portion of the outer skin with the outer skin defining a first secondary major surface of the tongue, the outer skin defining an intermediate surface through which the first primary major surface of the elongated element transitions to the first secondary major surface of the tongue.

In one embodiment of the invention the other of the pair of interengageable complementary formations comprises a groove extending into the second end of the elongated element, the outer skin of the elongated element defining an intermediate surface extending from the first primary major surface of the elongated element substantially to the groove. Preferably, the intermediate surface extends from the first primary major surface of the elongated element to the groove. Advantageously, the portion of the outer skin defining the intermediate surface extending from the first primary major surface substantially to the groove conceals a core material of the elongated element.

Preferably, the groove extends transversely of the elongated element. Advantageously, the groove extends substantially the width of the elongated element.

In an alternative embodiment of the invention the other one of the interengageable complementary formations comprises a recess formed in the first primary major surface of the elongated element adjacent the second end thereof, the outer skin of the elongated element defining an abutment surface of the recess for abutting an underside of the tongue of an adjacent elongated element. Preferably, the outer skin defines an intermediate surface through which the first primary major surface of the elongated element transitions to the abutment surface of the recess. Advantageously, the recess extends transversely of the elongated element. Ideally, the recess extends substantially the width of the elongated element.

In one embodiment of the invention each intermediate surface defines a radiused surface.

In another embodiment of the invention each intermediate surface defines a convex radiused surface.

In an alternative embodiment of the invention each intermediate surface defines a concave radiused surface.

In a further aspect of the invention the elongated element extending longitudinally between spaced apart first and second ends and defining a first primary major surface, the first and second ends terminating in respective similar coupling means engageable with respective connecting means for coupling the elongated element to respective adjacent similar elongated elements in end-to-end relationship, the elongated element comprising an outer skin defining the first major surface of the elongated elements, each coupling means comprising a tongue extending longitudinally from the corresponding end of the elongated element, each tongue comprising a portion of the outer skin, so that the outer skin defines a first secondary major surface of each tongue, the outer skin defining respective intermediate surfaces through which the first primary major surface of the elongated element transitions to the first secondary major surfaces of the tongues.

Further an assembly comprising at least one elongated element according to the invention is provided, and at least one connecting means for connecting the elongated element to an adjacent elongated element in end-to-end relationship, the connecting means having a pair of grooves facing in respective opposite directions, the grooves being adapted to engage the tongues of the adjacent elongated elements.

Preferably, each connecting means extends substantially the width of the elongated element.

In a further aspect of the invention an elongated element extends longitudinally between spaced apart first and second ends and defines a first primary major surface, the first and second ends terminating in respective similar coupling means engageable with a connecting means for coupling the elongated element in end-to-end relationship with adjacent similar elongated elements, the elongated element comprising an outer skin defining the first primary major surface of the elongated element, each coupling means comprising a groove extending longitudinally into the elongated element from the corresponding one of the first and second ends thereof, the outer skin defining respective intermediate surfaces extending from the first primary major surface of the elongated element substantially to the grooves.

Preferably, each intermediate surface extends from the first major surface of the elongated element to the corresponding groove.

Advantageously, the portion of the outer skin defining each intermediate surface extending from the first primary major surface substantially to the corresponding groove conceals a core material of the elongated element.

Additionally the invention provides an assembly comprising at least one elongated element according to the invention, and at least one connecting means for connecting the elongated element to an adjacent elongated element in end-to-end relationship, the connecting means comprising a pair of tongues extending in respective opposite directions for engaging the grooves of the first and second ends of a pair of adjacent elongated elements.

Preferably, the connecting element extends substantially the width of the elongated element.

In one embodiment of the invention the die is adapted to form an indent into the first primary major surface of the elongated member to displace the portion of the first primary major surface to form the first secondary major surface.

In another embodiment of the invention the means for removing the material from the elongated member comprises a first milling cutter.

In a further embodiment of the invention the parting means comprises a cutting disc of the first milling cutter.

Preferably, the cutting disc of the first milling cutter is adapted to simultaneously part the elongated element from the elongated member during removal of the material from the elongated member for defining the second secondary major surface of the tongue.

Advantageously, a second milling cutter is provided for forming a groove in the elongated element in an end thereof opposite to the end adjacent which the tongue is formed. Preferably, the second milling cutter is adapted for forming the groove in the elongated member prior to forming the tongue in the elongated member of the next to be formed elongated element.

The advantages of the invention are many. A particularly important advantage of the invention is that it provides a method whereby an elongated element can be readily easily produced from an elongated member in a particularly efficient manner. In particular, the method provides for the sequential production of elongated elements from an elongated member, and is particularly suitable for producing cladding and other planks and elongated elements sequentially from an elongated extruded member of plastics material. Another very important advantage of the invention is the fact that the respective opposite ends of the elongated elements can be joined to produce a weatherproof joint, which is aesthetically pleasing, and the elongated elements can be joined in end-to-end abutting relationship without the need for any other coupling or connecting element. Additionally, the elongated elements can be joined end-to-end without the core material of the elongated elements being exposed. Furthermore, the interengageable complementary formations of adjacent elongated elements may be glued together or dry jointed, and when dry jointed, longitudinal expansion and contraction of the elongated elements resulting from temperature change is accommodated.

The invention will be more clearly understood from the following description of some preferred embodiments thereof, which are given by way of example only, with reference to the accompanying drawings, in which:
Fig. 1 is a front elevational view of a plurality of lap planks according to the invention assembled cladding a wall (not shown) of a structure (also not shown),
Fig. 2 is a cross-sectional end elevational view of a portion of the assembled lap planks on the line II-II of Fig. 1,
Fig. 3 is a side elevational view of a portion of the assembled lap planks of Fig. 1,
Fig. 4 is a cross-sectional end elevational view on the line IV-IV of Fig. 1 of one of the lap planks of Fig. 1,
Fig. 5 is a side elevational view of one of the lap planks of Fig. 1,
Fig. 6 is a cross-sectional side elevational view of a detail of one of the lap planks of Fig. 1,
Fig. 7 is a cross-sectional side elevational view of another detail of one of the lap planks of Fig. 1,
Fig. 8 is a front elevational view of one of the lap planks of Fig. 1,
Fig. 9 is a side elevational view of one of the lap planks of Fig. 1 being formed from an elongated extruded member,
Fig. 10 is a partly schematic end view of apparatus according to the invention for sequentially forming a plurality of the lap planks of Fig. 1 from the elongated extruded member of Fig. 9,
Fig. 11 is a top plan view of a portion of the apparatus of Fig. 10,
Fig. 12 is a top plan view of another portion of the apparatus of Fig. 10,
Fig. 13 is an end elevational view of the portion of Fig. 12 of the apparatus of Fig. 10,
Fig. 14 is a side elevational view of a detail of a portion of the apparatus of Fig. 10 illustrated with one of the lap planks of Fig. 1 being formed from the elongated extruded member of Fig. 9,
Fig. 15 is a view similar to Fig. 14 of the portion of the apparatus of Fig. 10 in a different state to that of Fig. 14,
Fig. 16 is a view similar to Fig. 14 of the portion of the apparatus of Fig. 10 in another different state to that of Fig. 15,
Fig. 17 is a view similar to Fig. 14 of the portion of the apparatus of Fig. 10 in a further different state to that of Fig. 16,
Fig. 18 is a side elevational view of a pair of lap planks according to another embodiment of the invention,
Fig. 19 is a schematic side elevational view of one of the lap planks of Fig. 18 being formed from an elongated extruded member which is similar to the elongated extruded member of Fig. 9,
Fig. 20 is a schematic side elevational view of another lap plank according to the invention being formed from an elongated extruded member similar to the elongated extruded member of Fig. 9,
Fig. 21 is a schematic side elevational view of another lap plank according to the invention being formed from an elongated extruded member similar to the elongated extruded member of Fig. 9,
Fig. 22 is a schematic side elevational view of another lap plank according to the invention being formed from an elongated extruded member similar to the elongated extruded member of Fig. 9,
Fig. 23 is a schematic side elevational view of another lap plank according to the invention being formed from an elongated extruded member similar to the elongated extruded member of Fig. 9,
Fig. 24 is a schematic side elevational view of another lap plank according to the invention being formed from an elongated extruded member similar to the elongated extruded member of Fig. 9,
Fig. 25 is a schematic side elevational view of another lap plank according to the invention being formed from an elongated extruded member similar to the elongated extruded member of Fig. 9,
Fig. 26 is a schematic side elevational view of another lap plank according to the invention being formed from an elongated extruded member similar to the elongated extruded member of Fig. 9,
Fig. 27 is a side elevational view of a pair of lap planks according to a further embodiment of the invention,
Fig. 28 is a side elevational view of a connecting element for connecting the lap planks of Fig. 27 in end-to-end abutting relationship with each other,
Fig. 29 is a schematic side elevational view of one of the lap planks of Fig. 27 being formed from an elongated extruded member similar to the elongated extruded member of Fig. 9,
Fig. 30 is another schematic view of one of the lap planks of Fig. 27 being formed from the elongated extruded member of Fig. 9,
Fig. 31 is a side elevational view of one of the lap planks of Fig. 27 having been formed from the elongated extruded member of Fig. 9,
Fig. 32 is a side elevational view of a pair of lap planks according to a further embodiment of the invention,
Fig. 33 is a side elevational view of a connecting element for connecting the lap planks of Fig. 32 in end-to-end abutting relationship with each other,
Fig. 34 is a schematic side elevational view of one of the lap planks of Fig. 32 being formed from an elongated extruded member similar to the elongated extruded member of Fig. 9,
Fig. 35 is another schematic view of one of the lap planks of Fig. 32 being formed from the elongated extruded member of Fig. 9, and
Fig. 36 is a side elevational view of one of the lap planks of Fig. 32 having been formed from the elongated extruded member of Fig. 9,

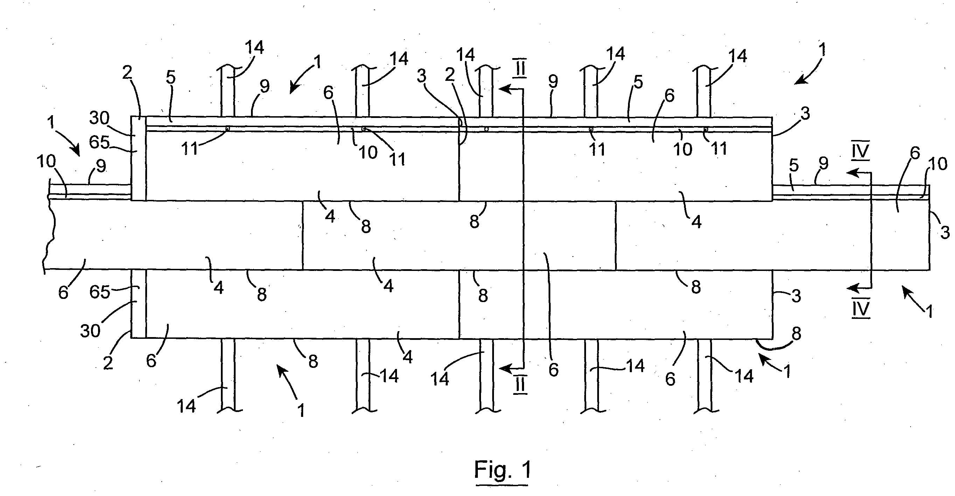

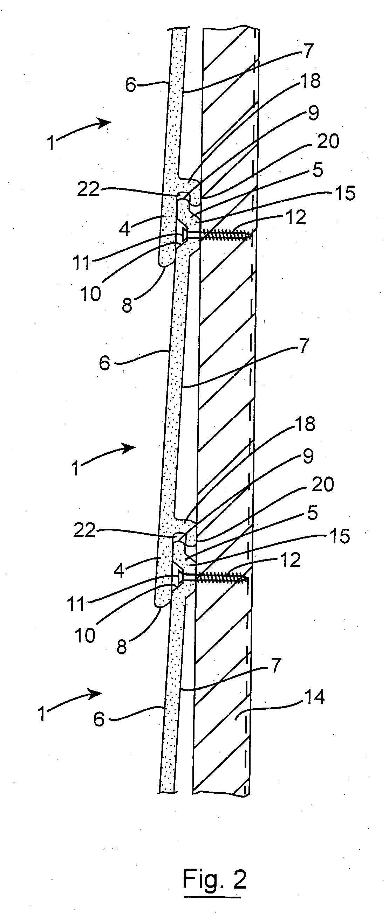

Referring to the drawings and initially to Figs. 1 to 6, there is illustrated a plurality of elongated elements according to the invention, which in this embodiment of the invention comprises a plurality of cladding planks, namely, lap planks, indicated generally by the reference numeral 1. The lap planks 1 are suitable for cladding a building, for example, for cladding outer walls of a house or other structure with a lower portion 4 of each lap plank 1 overlapping an upper portion 5 of an adjacent lap plank 1. The lap planks 1 are sequentially formed by a method according to the invention from an elongated member, which in this embodiment of the invention is an extruded member 35 of plastics material. The method for sequentially forming the lap planks 1 from the extruded member 35 is described below.

Each lap plank 1 extends between respective first and second ends 2 and 3, and defines a first primary major surface, namely, a front surface 6 and a second primary major surface, namely, a rear surface 7. The front and rear surfaces 6 and 7 extend between side edges 8 and 9, which in use are configured so that the side edge 8 forms a lower edge of each lap plank 1, while the side edge 9 forms an upper side edge of each lap plank 1, with the lower portion 4 of each lap plank 1 extending along the lower side edge 8 and the upper portion 5 of each lap plank 1 extending along the upper side edge 9.

An elongated screw accommodating channel 10 extends into the front surface 6 of each lap plank 1 spaced apart from the upper side edge 9 in the upper portion 5 thereof for accommodating heads 11 of screws 12 at spaced apart intervals along the screw accommodating channel 10 for securing the lap plank 1 to battens 14 secured to a wall (not shown) or other structure of a building. An elongated ridge 15 extends from the rear surface 7 of each lap plank 1 in the upper portion 5 and extends longitudinally along the lap plank 1 aligned with the screw accommodating channel 10 for spacing the rear surface 7 of the lap plank 1 from the battens 14.

An elongated engagement element 18 of hook-shaped cross-section extends from the rear surface 7 of each lap plank 1 adjacent the lower portion 4 thereof and extends longitudinally along the lap plank 1 for engaging the upper side edge 9 of an adjacent lower lap plank 1 for positioning the lower portion 4 of the lap plank 1, so that the lower portion 4 of the lap plank 1 overlaps the upper portion 5 of an adjacent lower lap plank 1 with the screw accommodating channel 10 in the upper portion 5 of the adjacent lower lap plank 1 overlapped and covered by the lower portion 4 of the lap plank 1. The engagement element 18 defines an abutment surface 20 which is adapted to engage the battens 14 for spacing the lower portion 4 of the lap plank 1 from the battens 14. The engagement element 18 defines an elongated slot 22 which engages the upper side edge 9 of an adjacent lower lap plank 1.

The lap planks 1 as mentioned above are sequentially formed from the extruded member 35 of plastics material. The extruded member 35, and in turn each lap plank 1 comprises a main body member or core 24 of unplasticised expanded cellular polyvinyl chloride (PVCue), and an outer skin 25 of unexpanded polyvinyl chloride (PVC) which is formed on one side only of the extruded member 35 and the lap plank 1. The unexpanded outer skin 25 is of thickness of approximately 0.6mm and defines the front surface 6 of the lap plank 1 and the extruded member 35. Longitudinally extending portions 26 and 27 of the outer skin 25 are lapped around the respective lower and upper side edges 8 and 9 of the lap plank 1 and the extruded member 35, and terminate at 28 and 29 on the rear surface 7 slightly spaced apart inwardly from the corresponding lower and upper side edges 8 and 9. In this embodiment of the invention the body member 24 and the outer skin 25 are coextruded during the extrusion of the extruded member 35.

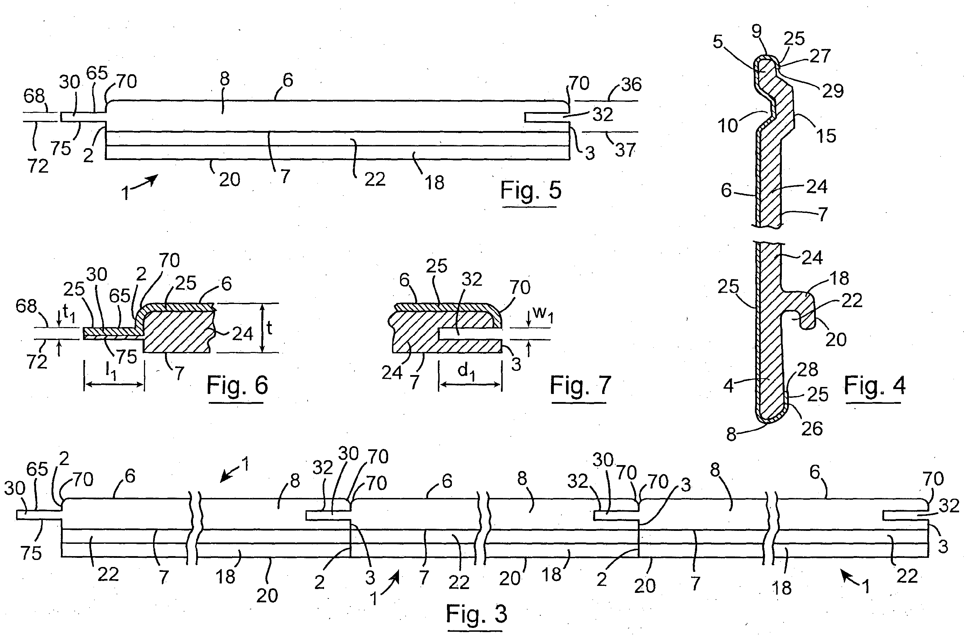

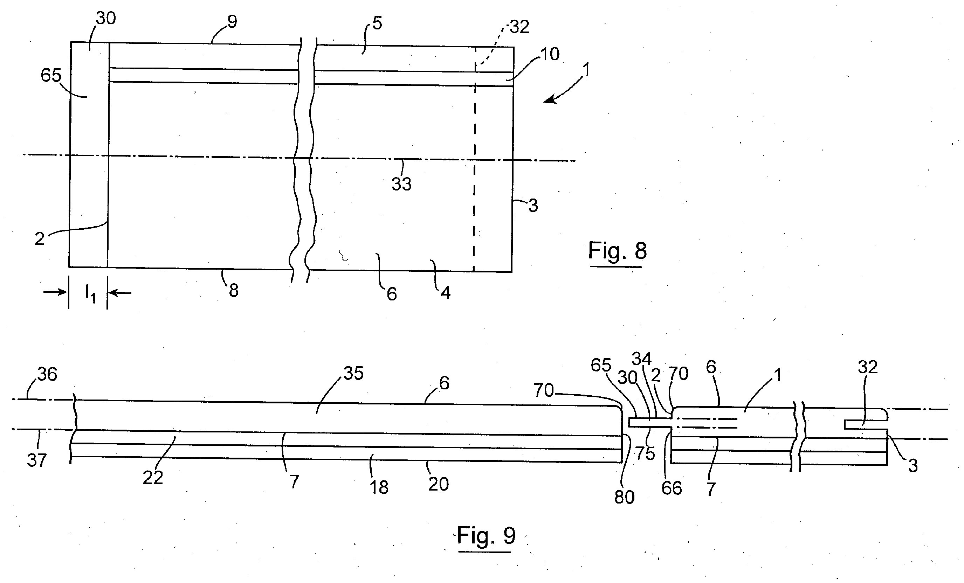

Each lap plank 1 terminates adjacent the first end 2 in one of a pair of interengageable complementary formations, namely, a tongue 30, and adjacent the second end 3 in the other one of the pair of interengageable complementary formations, which in this embodiment of the invention is a groove 32. The tongue 30 of each lap plank 1 is configured to engage the groove 32 of an adjacent lap plank 1 when the two lap planks 1 are in end-to-end abutting relationship with each other for weatherproofing the end-to-end joints of adjacent lap planks 1, and to allow for temperature related movement between adjacent lap planks 1. Additionally, the tongue 30 and grooves 32 of the lap planks 1 are configured so that when the tongue 30 of one lap plank 1 is engaged in the groove 32 of an adjacent lap plank 1, the front surfaces 6 of the lap planks 1 lie in a common plane, and the rear surfaces 7 of the lap planks 1 also lie in a separate common plane. The tongue 30 of each lap plank 1 extends outwardly longitudinally from the first end 2 of the lap plank 1. The tongue 30 of each lap plank 1 also extends transversely of the lap plank 1 and extends substantially the width of the lap plank 1, and furthermore, extends substantially perpendicularly to a longitudinally extending central axis 33 of the corresponding lap plank 1. The length *l₁* of each tongue 30 from the first end 2 of each lap plank 1 in this embodiment of the invention is approximately 13mm, see Figs. 6 and 8. The thickness *t₁* of the tongue 30 of each lap plank 1 is approximately 3mm, which is approximately 40% of the thickness of the lap plank 1 adjacent the tongue 30, see Fig. 6.

The groove 32 of each lap plank extend into each lap plank from the second end 3 a distance *d₁* of approximately 15mm, while the width *w₁* of each groove is approximately 3.5mm, which is approximately 50% of the thickness *t* of the lap plank 1, see Fig. 7. The groove 32 extends transversely across the corresponding lap plank 1 substantially perpendicularly to the central axis 33 thereof, and extend the width of the lap plank 1.

The lap planks 1 are formed sequentially from the extruded member 35, which is of the transverse cross-section which is of the transverse cross-section similar to that of the lap planks 1. The extruded member 35 defines the front and rear surfaces 6 and 7 of the lap planks 1 and the lower and upper side edges 8 and 9 of the lap planks 1. The front surface 6 of the extruded member 35 defines a first primary plane 36, while the rear surface 7 of the extruded member 35 defines a second primary plane 37. The first and second primary planes 36 and 37 are spaced apart from each other and extend parallel to each other.

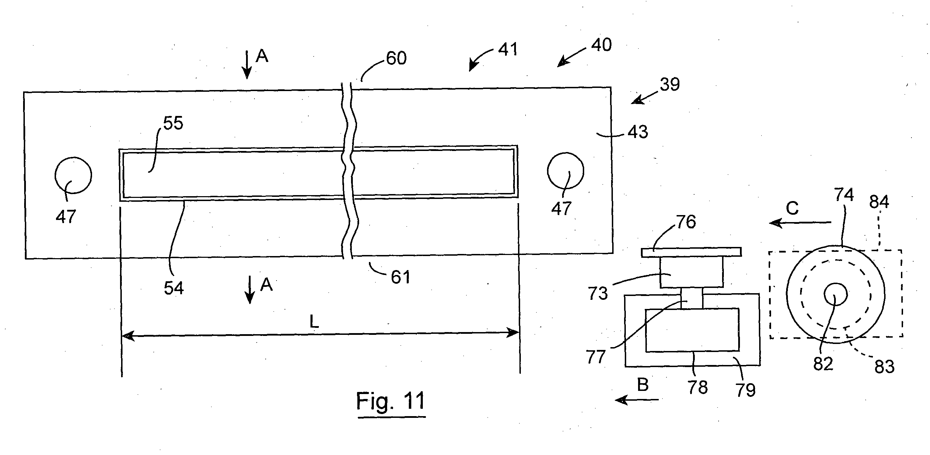

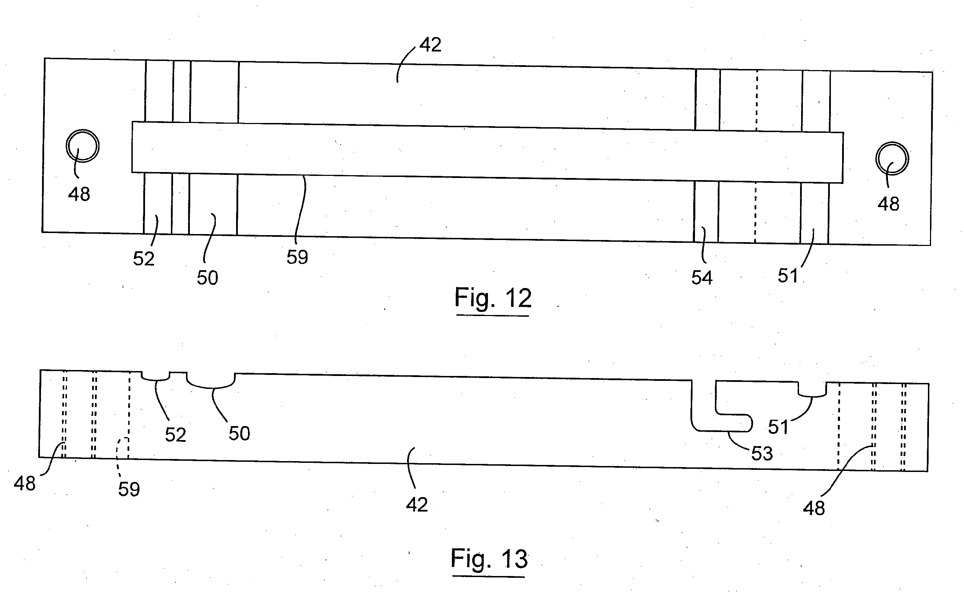

The method for forming the lap planks 1 sequentially from the extruded member 35 will now be described with reference to Figs 9 to 17 and with reference to apparatus, also according to the invention and indicated generally by the reference numeral 40, in which the lap planks 1 are formed from the extruded member 35. Before describing the method for forming the lap planks 1- from the extruded member 35, the apparatus 40 will first be described.

The apparatus 40 comprises a clamp 41 of a press tool 39. The clamp 41 comprises a pair of clamping members, namely, a lower clamping member 42 and an upper clamping member 43, between which the extruded member 35 is clamped during sequential formation of the lap planks 1. The clamp 41 defines a path 44 of advance between the clamping members 42 and 43 along which the extruded member 35 is advanced in the direction of the arrow A for sequential forming of the lap planks 1. A primary drive means, namely, a pair of primary hydraulic rams 45 mounted on the upper clamping member 43 urge the upper and lower clamping members 42 and 43 into engagement with the extruded member 35 with the rear surface 7 of the extruded member 35 supported on the lower clamping member 42. Piston rods 46 extending from the primary hydraulic rams 45 are slideably accommodated through bores 47 in the upper cladding member 43 and are secured to the lower clamping member 42 in respective threaded bore 48, so that on retraction of the piston rods 46 into the primary hydraulic rams 45, the upper and lower clamping members 42 and 43 clamp the extruded member 35 therebetween.

The lower clamping member 43 of the clamp 41 is formed with four guide tracks for guiding the extruded member 35 through the clamp 41, namely, a first track 50, a second track 51, and a third track 52 and a fourth track 53. The first, second and third tracks 50, 51 and 52 are formed by elongated grooves extending through the lower clamping member 42 parallel to the path 44 of advance, along which the extruded member 35 is urged through the clamp 41, for engaging the ridge 15 extending from the rear surface 7 of the extruded member 35, and the two portions 26 and 27, respectively, of the outer skin 25 which are lapped around the lower and upper side edges 8 and 9 of the extruded member 35. The fourth track 53 substantially defines the hook shape cross-section of the engagement element 18 which extends from the rear surface 7 of the extruded member 35, and slideably engages the engagement element 18 for guiding and aligning the extruded member 35 in the clamp 41.

The upper clamping member 43 defines a bore 54 of rectangular cross-section which extends therethrough for slideably accommodating a die 55 therethrough of the press tool 39 for forming an indent 34 in the front surface 6 of the extruded member 35. The die 55 is of length L which is greater than the width of the extruded member 35, so that the die 55 forms the indent 34 to extend transversely across the width of the extruded member 35 for forming a portion of the tongue 30 at the first end 2 of each lap plank 1, as will be described below. A secondary drive means, namely, a secondary hydraulic ram 56 mounted on the upper clamping-member 43 operates the die 55 for forming the indent 34 as will be described below. A piston rod 57 extending from the secondary hydraulic ram 56 is coupled to the die 55 for urging the die 55 into and out of engagement with the extruded member 35 as will be described below. The lower clamping member 42 also acts as an anvil of the press tool 39 and co-operates with the die 55 for facilitating formation of the portion of the tongue 30. A bore 59 of rectangular cross-section, which is of slightly greater rectangular cross-section than the rectangular cross-section of the die 55, extends through the lower clamping member 42 to accommodate a portion 71 of the extruded member 35 during formation of the indent 34.

A first milling cutter 73 for forming an undercut 66 in the extruded member 35 from the rear surface 7 beneath the indent 34 to form the tongue 30 is driven through a drive shaft 77 by a first drive motor 78. The first drive motor 78 is mounted on a first carrier 79 in the apparatus 40. The first carrier 79 is urgeable along a path in the direction of the arrow B transversely across the path 44 of advance of the extruded member 35 through the apparatus 40, for in turn urging the first milling cutter 73 transversely across the extruded member 35 for forming the undercut 66. A parting off cutting disc 76 integrally formed with the first milling cutter 73 and coaxially driven with the milling cutter 73 by the first drive motor 78 parts off each lap plank 1 from the extruded member 35 simultaneously, as the undercut 66 is being formed in the extruded member 35 by the first milling cutter 73 to complete the formation, of the tongue 30 of the lap plank 1 being parted off.

A second milling cutter 74 for forming the groove 32 in and end 80 of the extruded member 35 for the next of the lap planks 1 to be formed is mounted on a drive shaft 82 which is driven by a second drive motor 83. The second drive motor 83 is mounted on a second carrier 84. The second carrier 84 is urgeable along a path in the direction of the arrow C transversely across the path 44 of advance of the extruded member 35 through the apparatus 40, for in turn urging the second milling cutter 74 transversely across the extruded member 35 for forming the groove 32. Hydraulic rams (not shown) urge the first and second carriers 79 and 84 transversely across the path 44 of advance of the extruded member 35 in the directions of the arrows B and C, respectively.

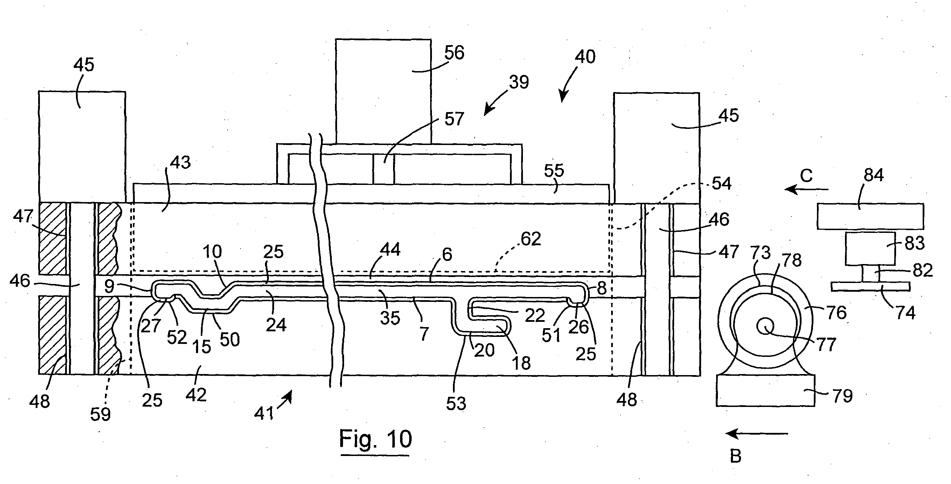

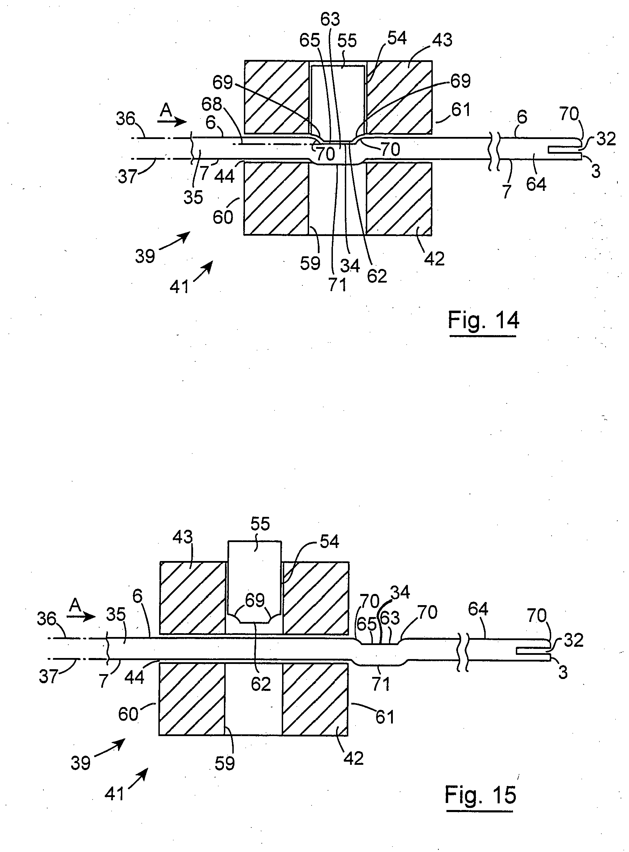

A cycle of the operation for forming a lap plank 1 from the extruded member 35 will now be described with reference to Figs. 10 to 17, and in particular, Figs. 14 to 17. For convenience the ridge 15 and the engagement element 18 of the extruded member 35 and the lap plank 1 are not illustrated in Figs. 14 to 17. Initially the extruded member 35 is urged through the apparatus 40 along the path 44 of advance in the direction of the arrow A from an upstream end 60 of the apparatus 40 to a downstream end 61 thereof. When the extruded member 35 extends from the clamp 41 at the downstream end 61 of the apparatus 40, the primary hydraulic rams 45 are operated to clamp the extruded member 35 between the lower and upper clamping members 42 and 43, see Fig. 14. The secondary hydraulic ram 56 is then operated for urging the die 55 downwardly in the bore 54 in the upper clamping member 43, for in turn urging a forming face 62 of the die 55 into engagement with the front surface 6 of the extruded member 35 to form the indent 34 in the front surface 6 of the extruded member 35, see Fig. 14. By forming the indent 34 in the front surface 6, a portion 63 of the front surface 6 of the extruded member 35 is displaced out of the first primary plane 36 inwardly into the extruded member 35 to form a first secondary major surface, namely, a first secondary surface 65 of the tongue 30. The first secondary surface 65 defines a first secondary plane 68 which extends substantially parallel to the first and second primary planes 36 and 37 defined by the front and rear surfaces 6 and 7 of the extruded member 35, and is spaced apart from the first primary plane 36 a distance of approximately 1.5mm. This results in the first secondary surface 65 of the tongue 30 being offset from the front surface 6 a distance of 1.5mm.

The forming face 62 of the die 55 is radiused at its respective end edges 69 to form intermediate surfaces 70 which in this embodiment of the invention are convex radiused surfaces 70, which extend between the first secondary surface 35 formed by the indent 34 and the front surface 6 of the extruded member 35. In other words, the front surface 6 of the extruded member 35 transitions through the radiused intermediate surfaces 70 to the first secondary surface 65 of the indent 34.

During formation of the indent 34 in the front surface 6 of the extruded member 35 to form the first secondary surface 65 of the tongue 30, the portion 71 of the rear surface 5 which is aligned with the indent 34 is urged into the bore 59 of the lower clamping member 42, thus resulting in a portion of the rear surface 7 of the extruded member 35 being displaced out of the second primary plane 37 outwardly of the extruded member 35, see Fig. 14. This results in the plastics material of the elongated member 35 flowing with the formation of the first secondary surface 65 of the tongue 30 so that there is no loss in strength of the tongue 30 when formed.

Once the first secondary surface 65 of the tongue 30 is formed by the indent 34, the die 55 is withdrawn into the bore 54 of the upper clamping member 43, and the upper and lower clamping members 42 and 43 are urged apart and the extruded member 35 is advanced through the clamp 41 along the path 44 of advance in the direction of the arrow A until the indent 34 is located at the downstream end 61 of the clamp 41 but relatively close thereto, see Fig. 15, the extruded member 35 is then reclamped in the clamp 41.

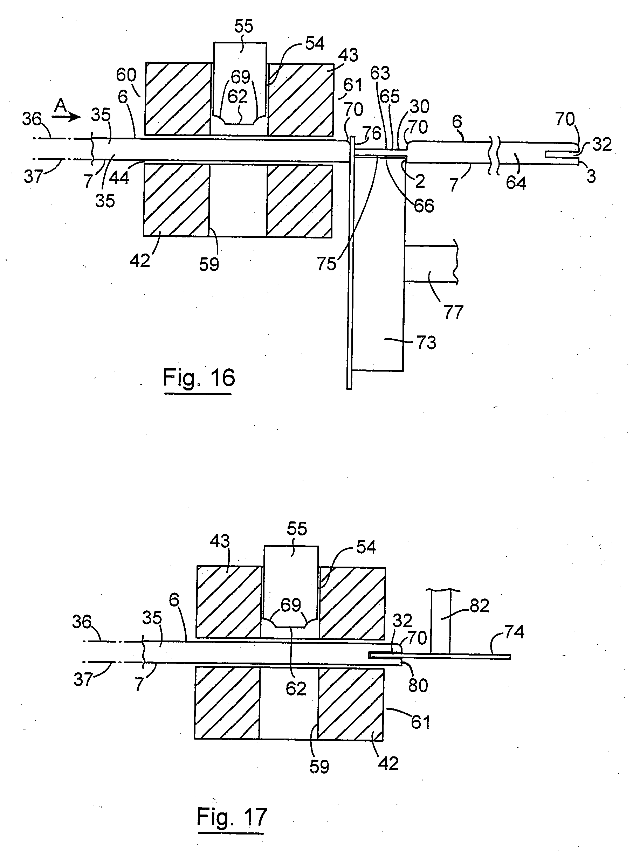

The remainder of the tongue 30 is now formed by the first milling cutter 73, and the cutting disc 76 simultaneously parts off a portion 64 of the elongated member 35 on which the tongue 30 is formed, see Fig. 16. The first carrier 79 is urged in the direction of the arrow B transversely across the extended member 35 with the first milling cutter 73 and the cutting disc 76 in engagement with the extruded member 35 for forming the undercut 66 in the extruded member 35 and for parting of the portion 64 of the extruded member 35. The first milling cutter 73, in forming the undercut 66 forms a second secondary major surface, namely, a second secondary surface 75 of the tongue 30. The second secondary surface 75 defines a second secondary plane 72 which extends substantially parallel to the first secondary plane 68 defined by the first secondary surface 65 of the tongue 30, and in turn extends parallel to the first and second primary planes 36 and 37 defined by the front and rear surfaces 6 and 7 of the extruded member 35, and the second secondary plane 72 lies intermediate the first and second primary planes 36 and 37.

If this is the first pass of the extruded member 35 through the apparatus 40, the parted off portion 64 will be waste. If this is the second or a subsequent pass of the extruded member 35 through the apparatus 40, the groove 32 in the second end 3 of the portion 64 just parted off will already have been formed as will be described below, and the parted off portion 64 will be a lap plank 1.

With the portion 64 of the extruded member 35 parted from the extruded member 35, and with the extruded member 35 still clamped between the clamping members 42 and 43 of the clamp 41, the groove 32 is formed into the end 80 of the extruded member 35 exposed at the downstream end 61 of the clamp 41. The groove 32 formed in the end 80 of the extruded member 35 forms the groove 32 in the second end 3 of the next of the lap planks 1 to be formed from the elongated member 35. The groove 32 is formed in the end 80 of the clamped extruded member by urging the second carrier 84 transversely across the extruded member 35 in the direction of the arrow C with the second milling cutter 74 in engagement with the end 80 of the extruded member 35 to form the groove 32, see Fig. 17.

On completion of the formation of the groove 32 in the end 80 of the extruded member 35, the primary hydraulic rams 45 are operated for urging the lower and upper clamping members 42 and 43 of the clamp 41 apart, and thus releasing the extruded member 35. The extruded member 35 is indexed along the path 44 of advance through the apparatus 40 an appropriate distance so that the next indent 34 to be formed in the extruded member 35 will be formed at the correct location to produce the next lap plank 1 to be formed to be of the desired length. When the extruded member 35 has been indexed the appropriate distance, the primary hydraulic rams 45 are operated to clamp the extruded member between the lower and upper clamping members 42 and 43. The secondary hydraulic ram 46 is then operated to urge the die 55 downwardly into engagement with the front surface 6 of the extruded member 35 to form the indent 34, and in turn the first secondary surface 65 of the tongue 30, as already described. The secondary hydraulic ram 46 is operated to withdraw the die 55 into the bore 54 of the upper clamping member 43, and the primary hydraulic rams 45 are operated to release the lower and upper clamping members 42 and 43 from the extruded member 35.

The extruded member 35 is advanced again until the indent 34 in the front surface 6 of the extruded member 35 is located at the downstream end 61 thereof but adjacent to the clamp 41. The primary hydraulic rams 45 are operated to re-clamp the extruded member 35 between the lower and upper clamping members 42 and 43. The first milling cutter 73 and the cutting disc 76 are operated to form the undercut 66 in the extruded member 35 from the rear surface 7 to in turn form the second secondary surface 75 of the tongue 30, and to part off the just formed lap plank 1 from the extruded member 35.

The second milling cutter 74 is then operated to form the groove 32 in the end 80 of the extruded member 35, which will form the groove 32 in the second end 3 of the next of the lap planks 1 to be sequentially formed from the elongated member 35. The clamp 41 is again released, and the extruded member 35 is indexed through the apparatus 40 as already described an appropriate distance so that the next of the lap planks 1 to be formed from the extruded member 35 will be of the desired length, and so the lap planks 1 are sequentially formed from the extruded member 35.

The cutting disc 76 is adapted to cut through the indent 34 adjacent the radiused intermediate surface 70 which is adjacent the end 80 of the extruded member 35, so that the end 80 of the extruded member 35 is radiused with the convex radiused surface extending from the front surface 6 of the extruded member 35 to the location at the end 80 of the extruded member 35 at which the groove 32 will extend into the extruded member 35 at the end 80 thereof. Accordingly, when the groove 32 is formed in the end 80 of the extruded member 35, the outer skin 25 of the extruded member 35 extends to the groove 32, so that when adjacent first and second ends 2 and 3 of a pair of lap planks 1 are joined together with the tongue 30 at the first end 2 of one of the lap planks 1 engaged in the grooves 32 at the second end 3 of the other lap plank 1, the convex radiused surface 70 of the outer skin 25 adjacent the groove 32 at the end 3 of that lap plank 1 conceals the expanded plastics material of the main body member or core 24 of that lap plank 1, and thus, there is no danger of the expanded material of the body member 24 of the lap plank 1 adjacent the groove 32 being exposed.

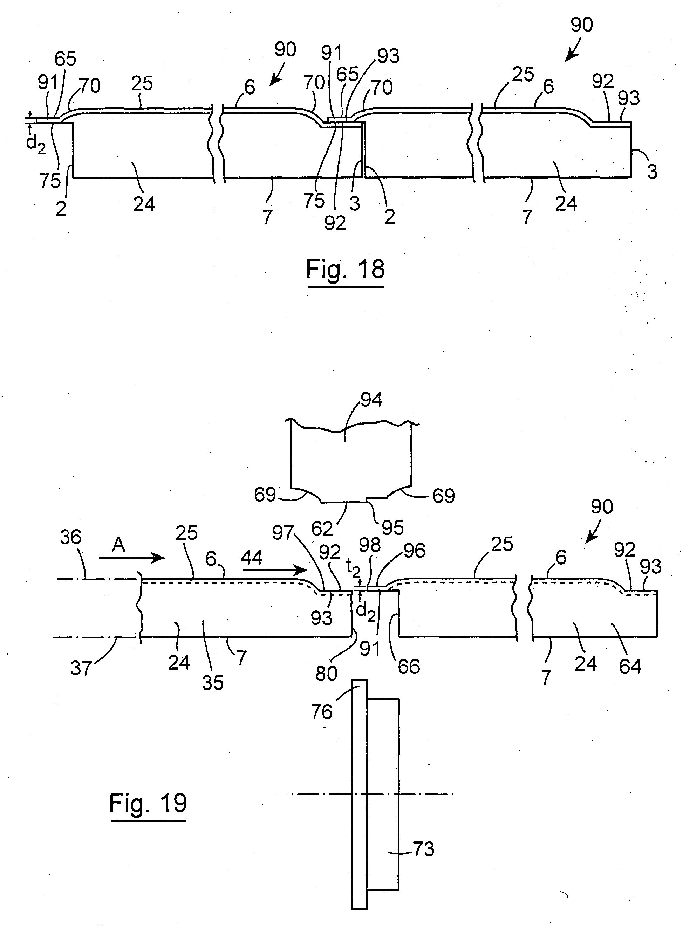

Referring now to Figs. 18 and 19, there is illustrated a lap plank according to another embodiment of the invention, indicated generally by the reference numeral 90, which is formed from an extruded member 35 which is identical to the extruded member 35 described with reference to the lap planks 1 which are described with reference to Figs. 1 to 17. In this embodiment of the invention the lap plank 90 is substantially similar to the lap plank 1 and similar components are identified by the same reference numerals. Additionally, the lap plank 90 is produced in apparatus which is substantially similar to the apparatus 40 described with reference to Figs. 10 to 17.

However, in this embodiment of the invention while one of the pair of interengageable complementary formations comprises a tongue 91 formed on the first end 2 of the lap plank 90, the other one of the pair of interengageable complementary formations comprises a recess 92 which is formed adjacent the second end 3 of the lap plank 90. The recess 92 and the tongue 91 are configured on the lap plank 90, so that when one lap plank 90 is in end-to-end abutting relationship with another lap plank 90, the tongue 91 of one of the lap planks 90 overlaps the recess 92 of the other lap plank 90 for joining the lap plank 90 in end-to-end abutting relationship with a weatherproof joint. Additionally, the tongues 91 and the recesses 92 of the lap planks 90 are configured so that when the tongue 91 of one lap plank 90 is overlapping the recess 92 of an adjacent lap plank 90, and is tightly engaged with the recess 92, the first primary planes 36 defined by the front surfaces 6 of the lap planks 1 coincide, and similarly, the second primary planes defined by the rear surfaces 7 of the lap planks 90 also coincide. In this embodiment of the invention the tongue 91 of each lap plank 90 is formed substantially solely from the outer skin 25 of the elongated member 35.

In this embodiment of the invention a die 94, which is substantially similar to the die 55 as well as forming the first secondary surface 65 of the tongue 91 of the lap plank 90 currently being formed also simultaneously forms the recess 92 of the next lap plank 90 to be subsequently formed. In forming the recess92 of the next lap plank 90 to be subsequently formed, the die 94 forms an abutment surface 93 in the recess 92. The abutment surface 93 of the recess 92 of each lap plank 90 is adapted for abutting a second secondary surface 75 of the tongue 91 of the adjacent one of the lap plank 90. The forming face 62 of the die 94 is stepped at 95 in order to form a stepped indent 96 with the portion 63 of the front surface 6 which forms the first secondary surface 65 of the tongue 91 displaced inwardly into the extruded member 35, and a portion 97 of the front surface 6 of the extruded member 35 which forms the abutment surface 93 of the recess 92 also displaced inwardly into the extruded member 35 but displaced further inwardly into the extruded member 35 than the first secondary surface 65 of the tongue 91. The depth *d₂* of the step 98 in the indent 96 is similar to the thickness *t₂* of the tongue 91, which is approximately 3mm, so that when the second secondary surface 75 of the tongue 91 is in tight abutting engagement with the abutment surface 93 of the recess 92 of an adjacent one of the lap planks 90, the first primary planes 36 defined by the front surfaces 6 of the lap planks 90 coincide with each other, as do the second primary planes 37 defined by the rear surfaces 7 of the lap planks 90 likewise coincide with each other.

Otherwise, the die 94 for forming the indent 96 in the extruded member 35 for forming the lap planks 90 is similar to the die 55 of the apparatus 50 for forming the indent 34 in the extruded member 35 for forming the lap planks 1.

The first milling cutter 73 for forming the second secondary surface 75 of the tongue 91 and for simultaneously parting off the lap plank 90 from the extruded member 35 is substantially similar to the first milling cutter 73 of the apparatus 40 described with reference to Figs. 10 to 17. Since in this embodiment of the invention the grooves in the lap planks 1 have been replaced with a recess 92 in the lap planks 90, the second milling cutter of the apparatus 40 is not required in the sequential formation of the lap planks 90 from the extruded member 35.

To produce the lap planks 90 sequentially from the extruded member 35, the die 55 of the apparatus 40 is replaced with the die 94, and thereafter operation of the apparatus 40 is substantially similar to that described with reference to the operation of the apparatus 40 for sequentially producing the lap planks 1 from the extruded member 35. In this embodiment of the invention the die 94 forms the stepped indent 96, which in turn forms the first secondary surface 65 of the tongue 91 of the currently being formed lap plank 90 and the recess 92 of the next lap plank 90 to be sequentially formed after parting off the currently being formed lap plank 90. After forming of the stepped indent 96 in the extruded member 35 by the die 94, the extruded member 35 is released from the clamp 41 and is urged through the clamp 41 so that the stepped indent 96 formed in the extruded member 35 is located on the downstream end of the clamp 41 just downstream of the clamp 41 as already described with reference to the formation of the lap planks 1. The extruded member 35 is again clamped by the clamp 41, and the first milling cutter 73 and the cutting disc 76 are operated to form the second secondary surface 75 of the tongue 91, and to simultaneously part off the just formed lap plank 90 from the extruded member 35. The recess 92 which is formed on the end 80 of the extruded member 35 forms the recess 92 of the next to be formed lap plank 90. The extruded member 35 is then advanced through the apparatus 40 an appropriate distance, so that the next stepped indent 96 to be formed by the die 94 in the extruded member 35 is formed at the appropriate location on the extruded member 35 so that the next lap plank 90 to be formed will be of the desired length.

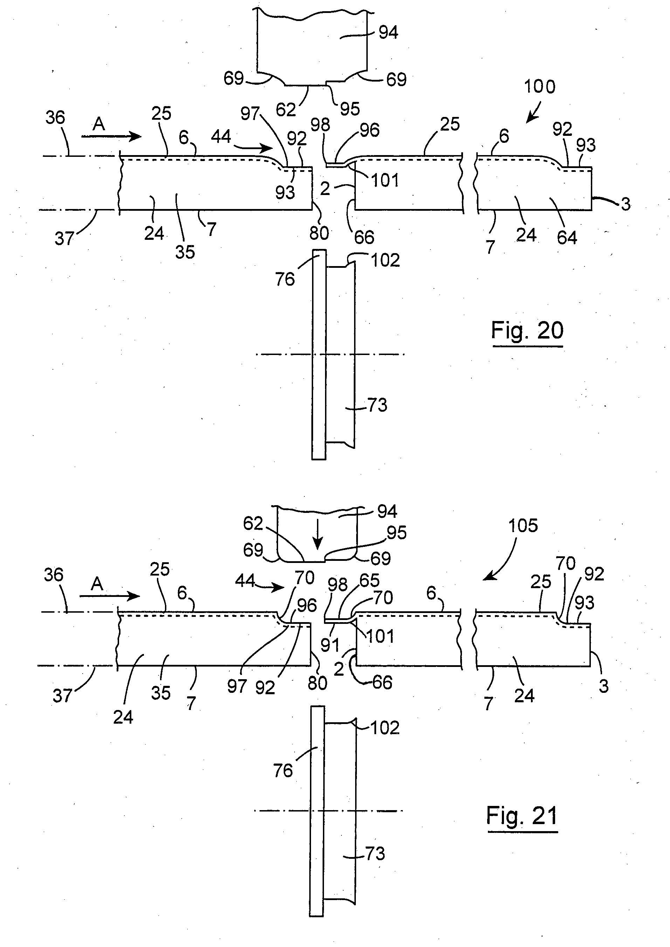

Referring now to Fig. 20 there is illustrated a lap plank also according to the invention and indicated generally by the reference numeral 100 which is formed from an extruded member 35 which is similar to the extruded member 35 from which the lap planks 1 are formed. The lap plank 100 is substantially similar to the lap planks 90, and similar components are identified by the same reference numerals. The only difference between the lap plank 100 and the lap planks 90 is that an undercut 101 is formed by the first milling cutter 73 under the radiused portion 70 of the skin 25 adjacent the tongue 91 of each lap plank 100. The undercut 101 is formed by the removal of expanded material from the body member 25. The first milling cutter 73 is shaped at 102 to form the undercut 101.

Otherwise, the lap plank 100 and the sequential formation of the lap planks 100 from the extruded member 35 is similar to that already described with reference to the lap planks 1 and 90.

Referring now to Fig. 21, there is illustrated a lap plank 105 also according to the invention which is formed from the extruded member 35, sequentially along with a plurality of the lap planks 105. The extruded member 35 is similar to the extruded member 35 from which the lap planks 1 are formed. The lap planks 105 are substantially similar to the lap planks 90 and 100, and similar components are identified by the same reference numerals. The only difference between the lap plank 105 and the lap plank 100 is that the radiused portions 70 between the front surfaces 6 of the lap planks 105 and the first secondary surface 65 and the abutment surface 93 of the tongue and recess 91 and 92, respectively, are concave instead of convex. The die 94 for forming the stepped indent 96 which forms the first secondary surface 65 of the tongue 91 and the abutment surface 93 of the recess 92 is appropriately radiused adjacent the side edges 69 thereof to form the concave radiused portions 70.

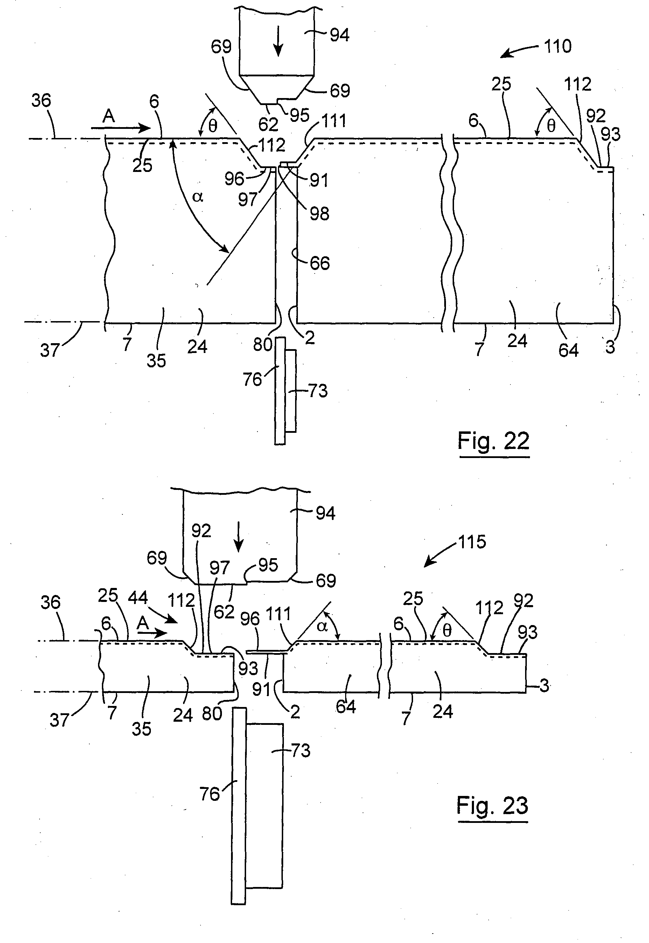

Referring now to Fig. 22, there is illustrated a lap plank 110 also according to the invention which is formed from an extruded member 35 similar to the extruded member 35 from which the lap planks 1 are formed. The lap plank 110 is substantially similar to the lap plank 90 and similar components are identified by the same reference numerals. The only difference between the lap plank 110 and the lap plank 90 is that the depth of the stepped indent 96 formed in the extruded member 35 to form the first secondary surface 65 of the tongue 91 and the abutment surface 93 of the recess 92 is deeper than the stepped indent 96 formed in the extruded member 35 to form the lap planks 90. Additionally, the first secondary surface 65 of the tongue 91 of the lap plank 110 is joined to the front surface 6 of the lap plank 110 by an inclined surface 111, which is inclined at an angle α of approximately 60° to the first primary plane 36 defined by the front surface 6 of the lap plank 110. Similarly, the abutment surface 93 of the recess 92 of each lap plank 110 is joined to the front surface 6 of the lap plank 110 by an inclined surface 112, which is also inclined to the first primary plane 36 defined by the front surface 6 of the lap plank 110 at an angle θ of approximately 60°.

Otherwise, the lap plank 110 and the formation of the lap planks 110 sequentially from the extruded member 35 is similar to that described with reference to the sequential formation of the lap planks 1.

Referring now to Fig. 23, there is illustrated a lap plank 115 also according to the invention, which is sequentially formed along with other lap planks 115 from an extruded member 35 which is similar to the extruded member 35 from which the lap planks 1 are sequentially formed. The lap planks 115 are substantially similar to the lap plank 110, and similar components are identified by the same reference numerals. The only difference between the lap planks 115 and the lap planks 110 is firstly, in the depth to which the stepped indent 96 is formed for forming the first secondary surface 65 of the tongue 91 and the abutment surface 93 of the recess 92, and secondly, in the inclined surfaces 111 and 112 which join the front surfaces 6 of the lap planks 115 to the first secondary surface 65 of the tongue 91 and the abutment surface 93 of the recess 92, respectively. In this embodiment of the invention the depth of the stepped indent 96 is less than the depth of the stepped indent 96 which forms the first secondary surface 65 and the abutment surface 93 of the tongue 91 and the recess 92, respectively, of the lap planks 110. The inclined surfaces 111 and 112 of the lap planks 115 are inclined at respective angles α and θ both of approximately 45° to the first primary plane 36 defined by the front surface 6 of the lap planks 115.

Otherwise, the lap planks 115 and their formation sequentially from the extruded member 35 are similar to that already described.

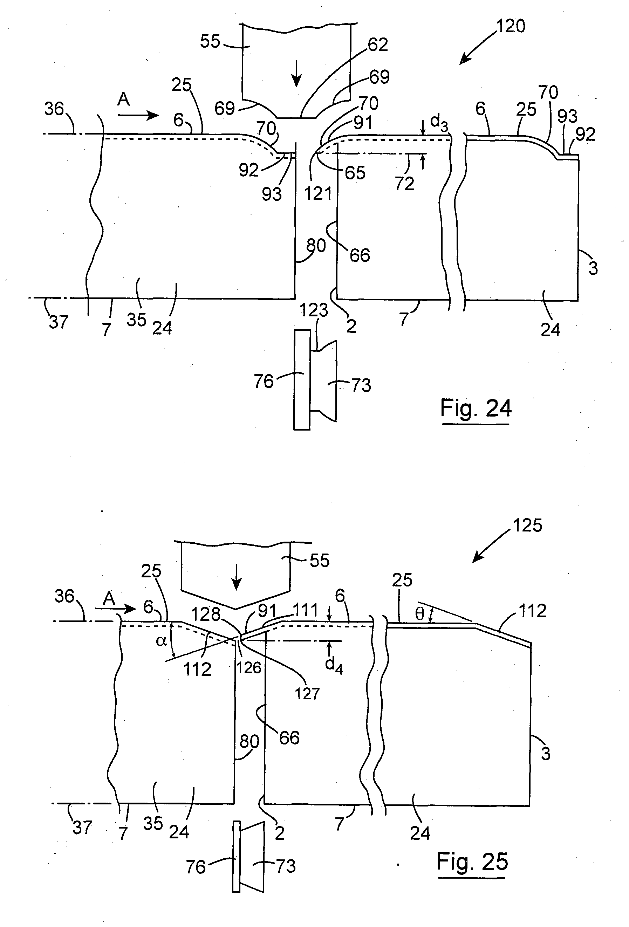

Referring now to Fig. 24, there is illustrated a lap plank 120 also according to the invention which is sequentially formed along with other lap planks 120 from an extruded member 35 which is similar to the extruded member 35 from which the lap planks 1 are formed. The lap plank 120 is substantially similar to the lap plank 90, and similar components are identified by the same reference numerals. In this embodiment of the invention the tongue 91 is formed by the radiused portion 70 only, which is formed from an indent, which is substantially similar to the indent 34, which is formed in the extruded member 35 during the formation of the lap planks 1. In this embodiment of the invention the tongue 91 is formed solely from the skin 25 of the elongated member 35 and terminates at its distal end 121 in a second secondary surface 65, which defines a second secondary plane 72 which extends parallel to the first primary plane 36 defined by the front surface 6 of the elongated member 35. The depth *d₃* between the second secondary plane 72 defined by the second secondary surface 65 from the first primary plane 36 defined by the front surface 6 of the elongated member 35 is such that when the second secondary surface 65 of the tongue 91 is in abutting relationship with the abutment surface 93 of the recess 92 of an adjacent lap plank 120, the first primary planes 36 defined by the front surfaces 6 of adjacent lap planks 120 coincide with each other.

The second secondary surface 65 which is formed at the distal end 121 of the tongue 91 of each lap,plank 120 is formed by a cutting portion 123 of the first milling cutter 73.

Otherwise, the lap plank 120 is similar to the lap plank 90 and the sequential formation of the lap planks 120 from the elongated member 35 is similar to that already described with reference to the lap planks 1.

Referring now to Fig. 25, there is illustrated a lap plank 125 also according to the invention formed from an extruded member 35 which is similar to the extruded member 35 from which the lap planks 1 are sequentially formed. The lap plank 125 is substantially similar to the lap planks 90 and 120, and similar components are identified by the same reference numerals. The main difference between the lap plank 125 and the lap plank 120 is in the tongue 91 and the recess 92. In this case the tongue 91 of each lap plank 125 is inclined inwardly from the first primary plane 36 defined by the front surface 6 of the lap plank 125, and the abutment surface 93 of the recess 92 of each lap plank 125 is similarly inwardly inclined from the first primary plane 36 defined by the front surface 6 of the lap plank 125. In this embodiment of the invention the first secondary surface 65 of the tongue 91 and the abutment surface 93 of the recess 92 are inclined inwardly from the first primary plane 36 defined by the front surface 6 of the lap planks 125 at angles α and θ, respectively, both of approximately 25°.

In order that the first primary planes 36 defined by the front surfaces 6 of adjacent lap planks 125 when abutting each other in end-to-end relationship coincide with each other, the cutting disc 76 of the first milling cutter 73 is of sufficient thickness to form a gap 126 between the tongue 91 of the currently being formed lap plank 125 and the recess 92 of the next lap plank 125 to be subsequently formed, as the currently being formed lap plank 125 is being parted off from the extruded member 35. The gap 126 is such that the underside 127 of the distal end 128 of the tongue 91 of each lap plank 125 is at a depth *d₄* from the first primary plane 36 defined by the front surface 6 of the lap plank 125 so that when the underside 127 of the distal end 128 of the tongue 91 of each lap plank 125 engages a corresponding portion of the abutment surface 93 of the recess 92 of an adjacent lap plank 125 in adjacent end-to-end abutting relationship, the first primary planes 36 defined by the front surfaces 6 of the adjacent lap planks 125 coincide.

Otherwise, the lap plank 125 is similar to the lap plank 120, and the sequential formation of the lap planks 125 from the extruded member 35 is similar to that already described with reference to the lap planks 1.

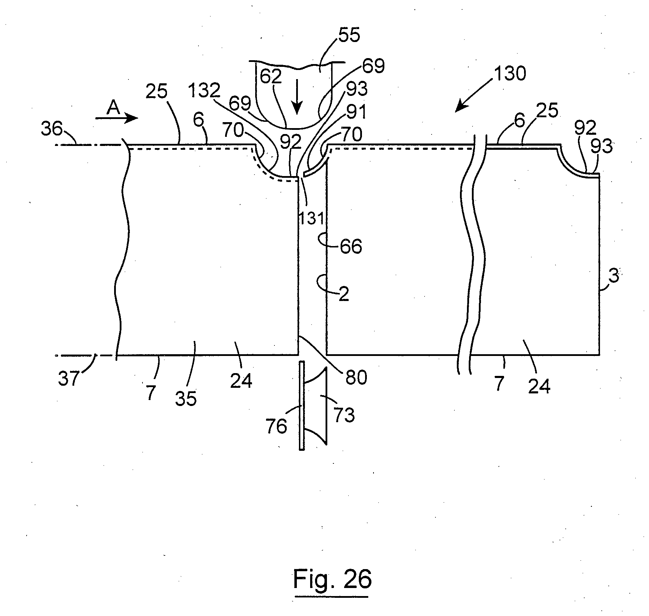

Referring now to Fig. 26, there is illustrated a lap plank 130 also according to the invention which is sequentially formed with other lap planks 130 from an extruded member 35 which is similar to the extruded member 35 from which the lap planks 1 are formed. The lap planks 130 are substantially similar to the lap planks 125 and similar components are identified by the same reference numerals. The main difference between the lap planks 130 and the lap planks 125 is in the tongue 91 and the recess 92. In this embodiment of the invention the first secondary surface 65 of the tongue 91 is of concave shape. Additionally, an indent 132 which forms the first secondary surface 65 of the tongue 91 and the abutment surface 93 of the recess 92 is not a stepped indent. Accordingly, to allow the tongue 91 of each lap plank 91 to overlap the recess 92 of an adjacent lap plank 130 in end-to-end abutting relationship, the cutting disc 76 of the first milling cutter 73 is of sufficient thickness to form a gap 131 between the tongue 91 of the lap plank 130 currently being formed and the end 80 of the extruded member 35 such that the depth of the underside 127 of the distal end 128 of the tongue 91 of the lap plank 130 is of such a depth from the first primary plane 36, so that when the underside 127 of the distal end 128 of the tongue 91 of the lap plank 130 engages the abutment surface 93 of the recess 92 of an adjacent lap plank 130 in end-to-end abutting relationship, the first primary planes 36 defined by the front surfaces 6 of the lap planks 130 coincide with each other.

A particular advantage of the lap planks which have been described with reference to Figs. 1 to 26 is that the lap planks can be joined end-to-end without the need for any additional coupling elements, filling or caulking.

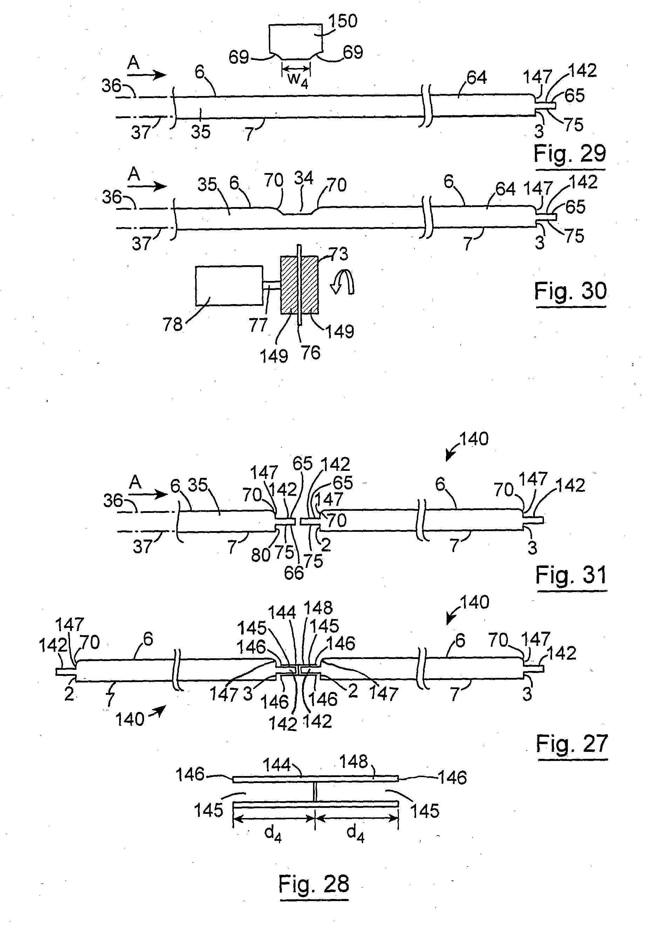

Referring now to Figs. 27 to 31, there is illustrated lap planks according to another embodiment of the invention, indicated generally by the reference numeral 140. The lap planks 140 are sequentially formed from an extruded member 35 which is similar to the extruded member 35 from which the lap planks 1 are formed. The lap planks 140 are somewhat similar to the lap planks 1, and where appropriate, similar components are identified by the same reference numerals. However, in this embodiment of the invention each lap plank 140 terminates at its respective first and second ends 2 and 3 in similar coupling means, which in this embodiment of the invention are tongues 142, which are identical to each other, and are similar to the tongues 30 of the lap planks 1. Connecting means, namely, connecting elements 144 are provided for coupling the first and second ends 2 and 3 of adjacent lap planks 140 in end-to-end abutting relationship with each other.

Each connecting element 144 is of length which corresponds to the width w of each lap plank 140 and is provided with coupling means, namely, identical grooves 145 which face in opposite directions from each other for engaging the tongues 142 of the ends 2 and 3 of adjacent lap planks 140. The depth *d*₅ of each groove 145 in the connecting elements 144 is substantially similar or just greater than the length *l₁* of each tongue 124 of the lap planks 140, so that when the tongues 142 of the first and second ends 2 and 3 of an adjacent pair of the lap planks 140 are engaged in the corresponding grooves 145 of one of the connecting element 144, longitudinally extending edges 146 of the connecting elements 144 substantially abut end edges 147 of the lap planks 140 adjacent the first and second ends 2 and 3. Additionally, the grooves 145 in the connecting elements 144 are located relative to a first major surface 148 of the connecting element 144, and the tongues 142 are located relative to the front surface 6 of the lap planks 140, so that the first major surface 148 of the connecting elements 144 lie in a common plane with the first primary plane 36 defined by the front surfaces 6 of the adjacent lap planks 140 when the adjacent lap planks 140 are coupled together by the connecting elements 144.

The lap planks 140 are sequentially formed in the apparatus 40 from the extruded member 35 in a manner substantially similar to that of the sequential formation of the lap planks 1 from the extruded member 35 in the apparatus 40. However, in this embodiment of the invention since the opposite first and second ends 2 and 3 of the lap planks 140 terminate in tongues 142, the second milling cutter 74 of the apparatus 40 for forming the grooves 32 in the lap planks 1 is not required. Additionally, in this embodiment of the invention the tongue 142 at the first end 2 of the lap plank 140 being currently formed is simultaneously formed with the tongue 142 of the next of the lap planks 140 to be subsequently formed from the extruded member 35. The width *w₄* of the face 62 between the radiused side edges 69 of the die 150 for forming the indent 34 from which the tongues 142 of adjacent lap planks 140 are simultaneously formed in the extruded member 35 is of sufficient width to form the two adjacent tongues 142 of the desired length *l₁* and to accommodate parting off of each lap plank 140 from the extruded member 35 by the cutting disc 76.

In this embodiment of the invention the first milling cutter comprises a pair of milling portions 149 for simultaneously forming the second secondary surfaces 75 of the adjacent tongues 142. The cutting disc 76 for parting off each lap plank 140 from the extruded member 35 simultaneously as the second secondary surfaces 75 of the adjacent tongues 142 are being formed is located centrally between the milling portions 149 of the first milling cutter 73.

During sequential formation of the lap planks 140 from the extruded member 35, the extruded member 35 is sequentially indexed through the apparatus 40 as already described with reference to the lap planks 1. The extruded member 35 is clamped in the clamp 41 and the die 150 is operated to form the indent 34 to form the first secondary surfaces 65 of the tongues 142 at the first end 2 of the lap plank 140 currently being formed, and the tongue 142 at the second end 3 of the next lap plank 140 to be subsequently formed. On the indent 34 having been formed, the extruded member 35 is advanced through the apparatus 40 until the indent 34 is located on the downstream end 61 of the clamp 41 but adjacent the lower and upper clamping members 42 and 43 thereof. The extruded member 35 is again clamped in the clamp 41, and the first milling cutter 73 with the cutting disc 76 is operated to traverse transversely in the direction of the arrow B across the extruded member 35 to simultaneously form the second secondary surfaces 75 of the adjacent tongues 142, and to simultaneously part off the just formed lap plank 140 from the extruded member 75. The clamp 41 is released from the extruded member 75, and the extruded member 75 is indexed through the apparatus 40 an appropriate distance so that the next indent 34 is formed at the appropriate location, so that the next lap plank 140 to be formed is of the desired length.

Otherwise, the lap plank 140 and the sequential formation of the lap planks 140 is similar to the lap planks 141 and their sequential formation.

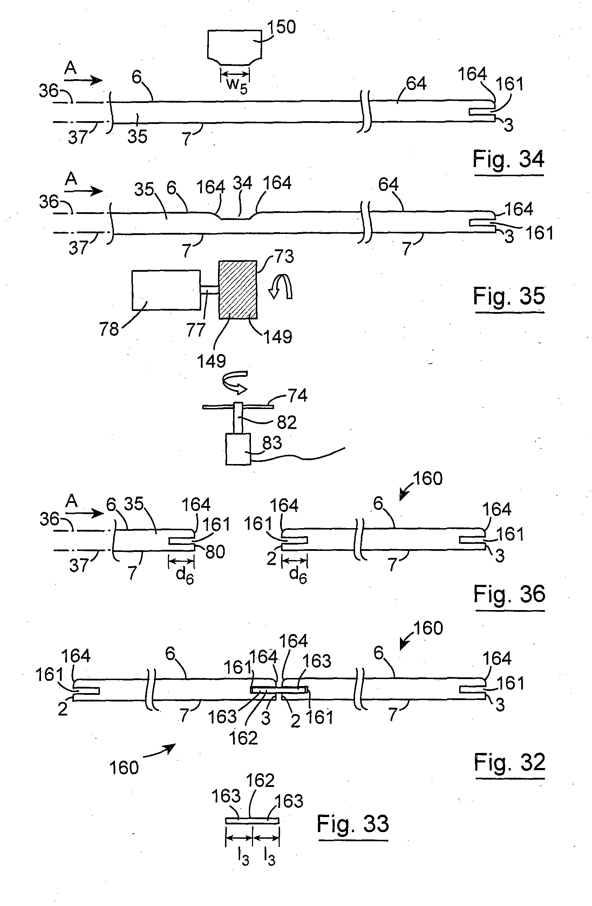

Referring now to Figs. 32 to 36, there is illustrated a lap plank according to another embodiment of the invention, indicated generally by the reference numeral 160. The lap planks 160 are sequentially formed from an extruded member 35 similar to the extruded member 35 from which the lap planks 1 are formed. The lap planks 160 are substantially similar to the lap planks 140 and indeed to the lap planks 1, and similar components are identified by the same reference numerals. The main difference between the lap planks 160 and the lap planks 140 is that instead of the first coupling means being formed by respective tongues at the first and second ends 2 and 3 of the lap planks 160, the first coupling means are formed by grooves 161 which are formed into the lap planks 160 at the respective first and second ends 2 and 3 thereof. A connecting means, in this embodiment of the invention comprising a connecting element 162 defines a pair of second coupling means, namely, tongues 163 for engaging the grooves 161, in the first and second ends 2 and 3 of an adjacent pair of lap planks 160 for connecting the lap planks 160 in end-to-end relationship. Each connecting element 162 is of width similar to the width of the lap planks 162.

In this embodiment of the invention in order to avoid the expanded PVCue material of the body member 24 being exposed at the respective opposite first and second ends 2 and 3 of the lap planks 160, the outer skin 25 which defines the first surface 6 of the lap planks 160 is radiused inwardly towards the grooves 161 at the first and second ends 2 and 3 of the lap planks 160. The radiusing of the outer skin at 164 of the lap planks 160 is formed during the sequential formation of the lap planks 160 from the extruded members 35.

The sequential formation of the lap planks 160 from the extruded member 35 is substantially similar to that described with reference to the lap planks 1. The lap planks 160 are sequentially formed from the extruded member 35 in the apparatus 40. In this case the extruded member 35 is indexed through the apparatus 40 as already described with reference to the sequential formation of the lap planks 1. The extruded member 35 is clamped in the clamp 41, and an indent 34 similar to the indent 34 which is formed in the extruded member 35 by the die 55 during formation of the lap planks 1 is similarly formed in the extruded member 35 by the die 55. By forming the indents 34 in the extruded member 35, the radiused portion 164 at the respective first and second ends 2 and 3 of the lap planks 160 of two adjacent sequentially formed lap planks 160 are simultaneously formed. In other words the radius portion 164 is formed on the first end 2 of the immediately next to be parted off lap plank 160 simultaneously as the radiused portion 164 is formed on the second end 3 of the lap plank 160 to be subsequently parted off. The depth of each indent 34 formed by the die 55 in the extruded member 35 is such that the outer skin 25 is radiused at 164 so that the outer skin 164 extends to the corresponding groove 161.

On each indent 34 having been formed in the extruded member 35, the extruded member 35 is advanced through the clamp 41 so that the indent 34 is located on the downstream end of the clamp 41 adjacent the lower and upper clamping members 42 and 43. The first milling cutter 73, which in this embodiment of the invention is provided without the cutting disc 76 is traversed transversely in the direction of the arrow B across the path 44 of advance of the extruded member 35 to remove all the material of the extruded member 35 beneath the indent 34 and between the radiused portions 164 in order to part off the next of the lap planks 160 to be formed from the extruded member 35. The width *w₆* of the first milling cutter 73 is similar to the width *w₅* of the first face 62 between the radiused side edges 69 of the die 150, so that the lap plank 160 currently being parted off from the extruded member 35 is parted off with the radiused portion 164 at the first end 2 intact, and the radiused portion 164 at the end 80 of the extruded member 35 also intact.

With the extruded member 35 still clamped in the clamp 41, the just parted off lap plank 160 is clamped by a second clamp (not shown), and is urged in a generally downstream direction by the second clamp (not shown) away from the clamped extruded member 35, so that the grooves 161 can be simultaneously formed by the second milling cutter 74 in the first end 2 of the just parted off lap plank 160 and in the end 80 of the clamped extruded member 35. Once the spacing between the first end 2 of the just parted off lap plank 160 and the end 80 of the clamped extruded member 35 is at the correct spacing to allow the grooves 161 to be simultaneously formed to the desired depth *d₆* in the first end 2 of the just parted off lap plank 160 and the end 80 of the clamped extruded member 35, the second milling cutter 74 is operated to traverse in the direction of the arrow C transversely of the path 44 of advance of the extruded member 35 through the apparatus 40 to simultaneously form the respective grooves 161.

On completion of the formation of the grooves 161, the just formed lap plank 160 is removed, and the extruded member 35 is indexed through the apparatus 40 an appropriate distance, so that the next indent 34 to be formed in the extruded member 35 is formed at an appropriate distance from the second end 3 of the next to be formed lap plank 160 so that the next to be formed lap plank 160 is of the desired length.

The tongues 163 of each connecting element 162 are each of length *l₃* just less than the depth *d₆* of each groove 161, so that when the first and second ends 2 and 3 of adjacent lap planks 160 are in end-to-end abutting relationship, the first and second ends 2 and 3 of the lap planks 160 tightly abut each other.

Otherwise, the lap planks 160 are similar to the lap planks 1 and the sequential formation of the lap planks 160 from the extruded member 35 is similar to the sequential formation of the lap planks 1 from the extruded member 35.

Forming the tongues and recesses of the lap planks by initially forming an indent in the extruded member 35 provides a particularly important advantage of the invention, in that the material of the main body member or core of the lap planks is concealed by the outer skin adjacent the end-to-end joints of the lap planks. The formation of the indent in the extruded member 35 displaces the outer skin 25 of the extruded member 35 inwardly into the extruded member. This in turn draws the outer skin 25 to follow the contour of the indent. Accordingly, the intermediate surfaces which extend between the front surface of the extruded member and the first secondary surface of the indent are formed by the outer skin which accordingly conceals the material of the body member or core of the extruded member. When the just formed lap plank is parted off from the extruded member, adjacent the indent, the intermediate surface which extends from the front surface of the extruded member extends downwardly adjacent the end 80 of the extruded member. By forming the groove in the end 80 to engage a tongue of an adjacent lap plank with the first primary planes defined by the front surfaces of the adjacent lap planks coinciding, the groove must be formed into the end of the extruded member so that the intermediate surface which is formed by the outer skin 25 of the extruded member extends to the groove. Thus, the intermediate surface which is formed by the outer skin 25 conceals the material of the main body member or core 24 of the extruded member 35, and in turn of the next to be formed lap plank between the front surface 6 of the extruded member 35 or lap plank and the groove. A further advantage of forming the indent in the extruded member to in turn form the first secondary surface 65 of the tongue allows the outer skin 25 of the extruded member 35 to form at least a part of the tongue, thereby producing a relatively strong tongue.

While the apparatus 40 for sequentially forming the lap planks from the extruded member 35 has been described as being a stationary apparatus, it is envisaged that the apparatus 40 may be adapted to be clamped onto the extruded member 35 and to move with the extruded member 35 as the extruded member 35 is being extruded, so that the lap planks may be sequentially formed from the extruded member 35 as the extruded member 35 is being extruded. In which case, it is envisaged that separate clamps to the upper and lower clamping members 42 and 43 of the clamp 41 would be provided for clamping the apparatus 40 onto the extruded member 35, and these additional clamps would be operated independently of the clamp 41. On formation and parting off of each lap plank from the extruded member 35, the apparatus would return to its start position, and would again clamp onto the extruded member 35 when an appropriate amount of the extruded member 35 had been indexed through the apparatus 40 to commence formation of the next of the lap planks to be formed.

While in some of the embodiments of the lap planks the die for forming the indent has been described as comprising radiused edges, while this is desirable, in certain cases, it may not be essential that the die be provided with radiused edges, since the radiusing of the portion 70 between the indent and the front surface of the elongated member 35 could be formed without the need to provide the die with radiused edges.

It will also be appreciated that while the various steps in the formation of the lap planks have been described as being formed in a single apparatus, it is envisaged that some of the steps may be formed in separate apparatus, for example, the forming of the indent may be formed in one apparatus, and the forming of the tongues may be formed in another apparatus, while the forming of the grooves may be formed in a still further apparatus. Similar comments to these also apply to the lap planks which are formed with tongues and recesses at their respective opposite ends, and also these comments apply to the lap planks which have been described with similar coupling means at their respective opposite ends.

While the lap planks have been described as comprising a body member of expanded PVCue, and an outer skin of PVC, the lap planks may be of any other suitable deformable material or materials, whether plastics material or otherwise. Indeed, it is envisaged that where the lap planks are of a plastics material, the lap planks may be entirely of a plastics material which is unexpanded.

It is also envisaged that while the method and apparatus according to the invention have been described for use in the formation of lap planks from extruded members, the method and apparatus may be used for forming any other elongated elements from any other type of elongated members.

In cases where the lap planks or other such elements are formed from an elongated member of plastics material, in general, it is envisaged that the plastics material of the elongated member will be at room temperature of approximately 18°C during the formation of the indent in the elongated member. However, this will largely depend on the plastics material and Whether some of the plastics material has been expanded or otherwise, and in certain cases, it may be necessary to either heat the elongated member prior to forming the indent, or alternatively, form the indent with a heated die. Where the lap planks or other elements are being formed from an elongated member as the elongated member is being extruded, it will be appreciated that the apparatus for forming the indent will be located at an appropriate distance from the extruder so that the temperature of the extruded elongated member will be at an appropriate temperature for forming the indent and for milling of the extruded member.

While the means for removing the material from the extruded member in order to form the second secondary surface 75 of the tongue has been described as being a milling cutter, any other suitable means for removing the necessary material to form the second secondary surface of the tongue may be used. Needless to say, any other suitable parting off means for parting off the formed or just formed lap plank or other element from the extruded member may be used. Indeed, in certain cases, a knife, a hot knife or a hotwire may be used for carrying out the parting off operation.

Needless to say, any other suitable means for forming the groove in the end or ends in the lap planks may be provided, for example, a milling router or bit.

While the lap planks have been described as comprising tongues and grooves of specific dimensions, it will be readily apparent to those skilled in the art that the coupling tongues and coupling grooves may be of any desired dimensions.

It will also be appreciated that while the lap planks have been described as being sequentially formed from an elongated member, in certain cases, it is envisaged that the lap planks may be formed from respective elongated members which would be cut to be slightly oversized relative to the length of the lap planks.

It will also be appreciated that while in many of the embodiments of the invention the tongues of the lap planks have been described as being formed by the outer skin of the lap plank, the tongues may be formed by part of the outer skin, or all of the outer skin as well as some of the expanded material of the body member.

While the lap planks have been described as being of a particular cross-section, the lap planks may be of any desired cross-section. Indeed, as discussed above, the elongated elements may be any other types of cladding planks or planks, and would be of appropriate transverse cross-section. Indeed, it is envisaged in certain cases that the planks may be of L-shape or channel-shape cross-section, and in which case, it is envisaged that tongues would be provided on each leg of the L-shaped or channel-shaped cross-section. In other words, tongues would be provided at one end and grooves at the other end of such elongated elements, or tongues could be provided at one end and recesses at the other end, or alternatively, tongues could be provided at both ends or grooves could be provided at both ends, as desired. It is also envisaged that the elongated elements may in fact be formed by sheets of material.

It is also envisaged that jointing means may be provided on respective opposite side edges of the elongated elements, and such jointing means may be any suitable jointing means, for example, tongue and groove joints, lap joints and the like.

## Claims

1. A method for producing an elongated element (1,90,100,105,110,115,120, 125,130) from an elongated member (35) of plastics material, the elongated element (1) to comprise a tongue (30,91) extending outwardly longitudinally from one end (2) of the elongated element and transversely across the elongated element, the elongated member (35) having opposite first and second primary major surfaces (6,7) defining respective spaced apart first and second primary planes (36,37), **characterised in that** the method comprises urging a die (55) of a press tool (39) into engagement with the first primary major surface (6) of the elongated member (35), the die extending transversely of the elongated member (35) for displacing a portion of the first primary major surface (6) of the elongated member (35) out of the first primary plane (36) inwardly into the elongated member (35) adjacent a location at which the tongue (30,91) is to be formed to form a first secondary major surface (65) spaced apart from the first primary plane (36), and forming an undercut (66) in the elongated member (35) from the second primary major surface (37) adjacent the location at which the tongue (30,91) is to be formed by machining a portion of the elongated member (35) adjacent the location at which the tongue (30,91) is to be formed to a depth from the second primary major surface (7) to form a second secondary major surface (75) spaced apart from the first secondary major surface (65) with the tongue (30,91) defined between the first and second secondary major surfaces (65,75).

2. A method as claimed in Claim 1 **characterised in that** the second primary major surface (7) of the elongated member (35) adjacent the location at which the tongue is to be formed is supported on an anvil (42) of the press tool (39) so that during displacing of the portion of the first primary major surface (6) inwardly into the elongated member (35), a portion of the second primary major surface (7) aligned with the portion of the first primary major surface (6) being displaced is displaced outwardly of the elongated member (35) through the second primary plane (37).

3. A method as claimed in Claim 1 or 2 **characterised in that** the first primary major surface (6) of the elongated member (35) transitions to the first secondary major surface (65) of the displaced portion of the first primary major surface (6) through an intermediate surface (70) adjacent at least one end of the displaced portion of the first primary major surface (6).

4. A method as claimed in Claim 3 **characterised in that** a portion (69) of the die (55) adjacent a face (62) thereof which is adapted for abutting the first primary major surface (6) of the elongated member is shaped to form the intermediate surface (70) during displacing of the portion of the first primary major surface (6) inwardly into the elongated member (35).

5. A method as claimed in any preceding claim **characterised in that** the elongated element (1) with the tongue (30,91) formed thereon is parted off from the elongated member (35) adjacent the tongue (30,91).

6. A method as claimed in any preceding claim **characterised in that** the elongated element (1) is parted off from the elongated member (35) simultaneously during forming of the undercut (66) into the elongated member (35) from the second primary major surface (7).

7. A method as claimed in any preceding claim **characterised in that** the undercut (66) is formed in the elongated member (35) from the second primary major surface (7) thereof by a milling cutter (73).

8. A method as claimed in any preceding claim **characterised in that** the milling cutter comprises a parting off tool (76) driven about a common rotational axis with the milling cutter 73), the diameter of the parting off tool (76) being greater than the diameter of the milling cutter (73) for parting off the elongated element (1) from the elongated member (35) during forming of the undercut (66) into the elongated member (35) from the second primary major surface (7).

9. A method as claimed in any preceding claim **characterised in that** the tongue (30,91) forms one of a pair of interengageable complementary formations (30,91,32,92), the other of the pair of interengageable complementary formations (30,91,32,92) being located adjacent an end (3) of the elongated element (1) opposite to the end (2) thereof from which the tongue (30,91) extends, the interengageable complementary formations (30,91,32,92) being configured on the elongated element (1) so that when the elongated element is joined end-to-end at its respective ends (2,3) to two other similar elongated elements (1), the tongue (30,91) of the elongated element (1) engages the other one of the interengageable complementary formation (32,92) on the adjacent end (3) of one of the other similar elongated elements (1), and the other interengageable complementary formation (32,92) of the elongated element (1) engages the tongue (30,91) on the adjacent end (2) of the other one of the other similar elongated elements (1).

10. A method as claimed in Claim 9 **characterised in that** the other interengageable complementary formation (32,92) of the elongated element (1) comprises a groove (32) extending into the elongated element from the end (3) of the elongated element (1) opposite to the end (2) thereof from which the tongue (30,91) extends.

11. A method as claimed in Claim 10 **characterised in that** the groove (32) extends into the elongated element (1) and extends transversely thereof.

12. A method as claimed in Claim 9 or 10 **characterised in that** the groove (32) is formed in the elongated element (1) prior to forming the tongue (30,91) of the elongated element.

13. A method as claimed in Claim 9 **characterised in that** the other interengageable complementary formation (32,92) of the elongated element (1) comprises a recess (92) extending into the elongated element (1) from the first primary major surface (6) thereof adjacent the end (3) of the elongated element (1) opposite to the end (2) thereof from which the tongue (30,91) extends.

## Patentansprüche

1. Verfahren zur Herstellung eines länglichen Elements (1, 90, 100, 105, 110, 115, 120, 125, 130) aus einem länglichen Teil (35) aus Kunststoffmaterial, wobei das längliche Element (1) eine Feder (30, 91) aufweisen soll, die sich von einem Ende (2) des länglichen Elements longitudinal auswärts und quer über das längliche Element erstreckt, wobei das längliche Teil (35) entgegengesetzte erste und zweite Primärhauptflächen (6, 7) hat, die entsprechende beabstandete erste und zweite Hauptebenen (36, 37) festlegen, **dadurch gekennzeichnet, dass** das Verfahren umfasst ein Drängen eines Stempels (55) eines Presswerkzeugs (39) in einen Eingriff mit der ersten Primärhauptfläche (6) des länglichen Teils (35), wobei der Stempel quer zu dem länglichen Teil (35) verläuft, um einen Teil der ersten Primärhauptfläche (6) des länglichen Teils (35) aus der ersten Hauptebene (36) nach innen in das längliche Teil (35) benachbart einer Stelle zu verdrängen, an der die Feder (30, 91) ausgebildet werden soll, um eine erste Sekundärhauptfläche (65) zu bilden, die von der ersten Hauptebene (36) beabstandet ist, und ein Ausbilden einer Hinterschneidung (66) in dem länglichen Teil (35) von der zweiten Primärhauptfläche (37) benachbart der Stelle, an der die Feder (30, 91) ausgebildet werden soll, durch spanendes Bearbeiten eines Teilbereichs des länglichen Teils (35) benachbart der Stelle, an der die Feder (30, 91) ausgebildet werden soll, auf eine Tiefe von der zweiten Primärhauptfläche (7), um eine von der ersten Sekundärhauptfläche (65) beabstandete zweite Sekundärhauptfläche (75) zu bilden, wobei die Feder (30, 91) zwischen den ersten und zweiten Sekundärhauptflächen (65, 75) festgelegt ist.

2. Verfahren nach Anspruch 1,
**dadurch gekennzeichnet, dass** die zweite Primärhauptfläche (7) des länglichen Teils (35) benachbart der Stelle, an der die Feder ausgebildet werden soll, auf einem Amboss (42) des Presswerkzeugs (39) abgestützt wird, so dass während eines Verdrängens des Teils der ersten Primärhauptfläche (6) nach innen in das längliche Teil (35) ein Teil der zweiten Primärhauptfläche (7), der mit dem verdrängten Teil der ersten Primärhauptfläche (6) fluchtet, durch die zweite Hauptebene (37) von dem länglichen Teil (35) nach außen verdrängt wird.

3. Verfahren nach Anspruch 1 oder 2,
**dadurch gekennzeichnet, dass** die erste Primärhauptfläche (6) des länglichen Teils (35) durch eine Zwischenfläche (70) benachbart dem zumindest einen Ende des verdrängten Teils der ersten Primärhauptfläche (6) in die erste Sekundärhauptfläche (65) des verdrängten Teils der ersten Primärhauptfläche (6) übergeht.

4. Verfahren nach Anspruch 3,
**dadurch gekennzeichnet, dass** ein Teilbereich (69) des Stempels (55) benachbart einer Front (62) desselben, die zum Anlegen an die erste Primärhauptfläche (6) des länglichen Teils eingerichtet ist, dazu geformt ist, während eines Verdrängens des Teils der ersten Primärhauptfläche (6) nach innen in das längliche Teil (35) die Zwischenfläche (70) auszubilden.

5. Verfahren nach einem der vorhergehenden Ansprüche,
**dadurch gekennzeichnet, dass** das längliche Element (1) mit der darauf ausgebildeten Feder (30, 91) benachbart der Feder (30, 91) von dem länglichen Teil (35) abgetrennt wird.

6. Verfahren nach einem der vorhergehenden Ansprüche,
**dadurch gekennzeichnet, dass** das längliche Element (1) von dem länglichen Teil (35) gleichzeitig mit dem Ausbilden der Hinterschneidung (66) in das längliche Teil (35) von der zweiten Primärhauptfläche (7) abgetrennt wird.

7. Verfahren nach einem der vorhergehenden Ansprüche,
**dadurch gekennzeichnet, dass** die Hinterschneidung (66) in dem länglichen Teil (35) von der zweiten Primärhauptfläche (7) desselben durch ein Fräswerkzeug (73) ausgebildet wird.

8. Verfahren nach einem der vorhergehenden Ansprüche,
**dadurch gekennzeichnet, dass** das Fräswerkzeug ein Abtrennwerkzeug (76) aufweist, das um eine mit dem Fräswerkzeug (73) gemeinsame Drehachse herum angetrieben wird, wobei der Durchmesser des Abtrennwerkzeugs (76) größer ist als der Durchmesser des Fräswerkzeugs (73), um das längliche Element (1) während eines Ausbildens der Hinterschneidung (66) in das längliche Teil (35) von der zweiten Primärhauptfläche (7) von dem länglichen Teil (35) abzutrennen.

9. Verfahren nach einem der vorhergehenden Ansprüche,
**dadurch gekennzeichnet, dass** die Feder (30, 91) eine eines Paars gegenseitig in Eingriff bringbarer komplementärer Strukturen (30, 91, 32, 92) bildet, wobei die andere des Paars gegenseitig in Eingriff bringbarer komplementärer Strukturen (30, 91, 32, 92) benachbart einem Ende (3) des länglichen Elements (1) entgegengesetzt dem Ende (2) desselben angeordnet ist, von dem sich die Feder (30, 91) erstreckt, wobei die gegenseitig in Eingriff bringbaren komplementären Strukturen (30, 91, 32, 92) derart auf dem länglichen Element (1) konfiguriert sind, dass dann, wenn das längliche Element Stoß an Stoß an seinen entsprechenden Enden (2, 3) mit zwei anderen ähnlichen länglichen Elementen (1) verbunden wird, die Feder (30, 91) des länglichen Elements (1) mit der anderen der gegenseitig in Eingriff bringbaren komplementären Strukturen (32, 92) an dem benachbarten Ende (3) eines der anderen ähnlichen länglichen Elemente (1) in Eingriff tritt und die andere gegenseitig in Eingriff bringbare komplementäre Struktur (32, 92) des länglichen Elements (1) mit der Feder (30, 91) am benachbarten Ende (2) des anderen der anderen länglichen Elemente (1) in Eingriff tritt.

10. Verfahren nach Anspruch 9,
**dadurch gekennzeichnet, dass** die andere gegenseitig in Eingriff bringbare komplementäre Struktur (32, 92) des länglichen Elements (1) eine Nut (32) aufweist, die sich in das längliche Element hinein von dem Ende (3) des länglichen Elements (1) erstreckt, das dem Ende (2) desselben entgegengesetzt ist, von dem aus sich die Feder (30, 91) erstreckt.

11. Verfahren nach Anspruch 10,
**dadurch gekennzeichnet, dass** die Nut (32) sich in das längliche Element (1) hinein erstreckt und quer dazu verläuft.

12. Verfahren nach Anspruch 9 oder 10,
**dadurch gekennzeichnet, dass** die Nut (32) in dem länglichen Element (1) vor einem Ausbilden der Feder (30, 91) des länglichen Elements gebildet wird.

13. Verfahren nach Anspruch 9,
**dadurch gekennzeichnet, dass** die andere gegenseitig in Eingriff bringbare komplementäre Struktur (32, 92) des länglichen Elements (1) eine Ausnehmung (92) umfasst, die sich in das längliche Element (1) hinein von der ersten Primärhauptfläche (6) desselben benachbart dem Ende (3) des länglichen Elements (1) erstreckt, das dem Ende (2) desselben entgegengesetzt ist, von dem sich die Feder (30, 91) erstreckt.

## Revendications

1. Procédé pour produire un élément allongé (1, 90, 100, 105, 110, 115, 120, 125, 130) à partir d'un élément allongé (35) en matière plastique, l'élément allongé (1) comprenant une languette (30, 91) s'étendant vers l'extérieur longitudinalement à partir d'une extrémité (2) de l'élément allongé et transversalement d'un côté à l'autre de l'élément allongé, l'élément allongé (35) ayant des première et seconde surfaces majeures principales opposées (6, 7) définissant des premier et second plans principaux (36, 37) espacés respectifs, **caractérisé en ce que** le procédé comprend les étapes suivantes : pousser une matrice (55) d'un outil de presse (39) en mise en prise avec la première surface majeure principale (6) de l'élément allongé (35), la matrice s'étendant transversalement par rapport à l'élément allongé (35) pour déplacer une partie de la première surface majeure principale (6) de l'élément allongé (35) hors du premier plan principal (36) vers l'intérieur dans l'élément allongé (35) adjacent à un emplacement au niveau duquel la languette (30, 91) doit être formée pour former une première surface majeure secondaire (65) espacée du premier plan principal (36), et former un dégagement (66) dans l'élément allongé (35) à partir de la seconde surface majeure principale (37) adjacente à l'emplacement auquel la languette (30, 91) doit être formée en usinant une partie de l'élément allongé (35) adjacente à l'emplacement auquel la languette (30, 91) doit être formée à une profondeur de la seconde surface majeure principale (7) pour former une seconde surface majeure secondaire (75) espacée de la première surface majeure secondaire (65) avec la languette (30, 91) définie entre les première et seconde surfaces majeures secondaires (65, 75).

2. Procédé selon la revendication 1, **caractérisé en ce que** la seconde surface majeure principale (7) de l'élément allongé (35) adjacente à l'emplacement auquel la languette doit être formée, est supportée sur une enclume (42) de l'outil de presse (39) de sorte que pendant le déplacement de la partie de la première surface majeure principale (6) vers l'intérieur dans l'élément allongé (35), une partie de la seconde surface majeure principale (7) alignée avec la partie de la première surface majeure principale (6) qui est déplacée, est déplacée vers l'extérieur de l'élément allongé (35) à travers le second plan principal (37).

3. Procédé selon la revendication 1 ou 2, **caractérisé en ce que** la première surface majeure principale (6) de l'élément allongé (35) effectue une transition vers la première surface majeure secondaire (65) de la partie déplacée de la première surface majeure principale (6) à travers une surface intermédiaire (70) adjacente à au moins une extrémité de la partie déplacée de la première surface majeure principale (6).

4. Procédé selon la revendication 3, **caractérisé en ce qu'**une partie (69) de la matrice (55) adjacente à sa face (62) qui est adaptée pour venir en butée contre la première surface majeure principale (6) de l'élément allongé est formée pour former la surface intermédiaire (70) pendant le déplacement de la partie de la première surface majeure principale (6) vers l'intérieur dans l'élément allongé (35).

5. Procédé selon l'une quelconque des revendications précédentes, **caractérisé en ce que** l'élément allongé (1) avec la languette (30, 91) formée sur ce dernier, est séparé de l'élément allongé (35) adjacent à la languette (30, 91).

6. Procédé selon l'une quelconque des revendications précédentes, **caractérisé en ce que** l'élément allongé (1) est séparé de l'élément allongé (35) simultanément pendant la formation du dégagement (66) dans l'élément allongé (35) de la seconde surface majeure principale (7).

7. Procédé selon l'une quelconque des revendications précédentes, **caractérisé en ce que** le dégagement (66) est formé dans l'élément allongé (35) à partir de sa surface majeure principale (7) par une fraise (73).

8. Procédé selon l'une quelconque des revendications précédentes, **caractérisé en ce que** la fraise comprend un outil de séparation (76) entraîné autour d'un axe de rotation commun avec la fraise (73), le diamètre de l'outil de séparation (76) étant supérieur au diamètre de la fraise (73) pour séparer l'élément allongé (1) de l'élément allongé (35) pendant la formation du dégagement (66) dans l'élément allongé (35) de la seconde surface majeure principale (7).

9. Procédé selon l'une quelconque des revendications précédentes, **caractérisé en ce que** la languette (30, 91) forme l'une d'une paire de formations complémentaires interchangeables (30, 91, 32, 92), l'autre de la paire de formations complémentaires interchangeables (30, 91, 32, 92) étant positionnée de manière adjacente à une extrémité (3) de l'élément allongé (1) opposée à son extrémité (2) à partir de laquelle la languette (30, 91) s'étend, les formations complémentaires interchangeables (30, 91, 32, 92) étant configurées sur l'élément allongé (1) de sorte que lorsque l'élément allongé est assemblé bout à bout au niveau de ses extrémités (2, 3) respectives aux deux autres éléments allongés (1) similaires, la languette (30, 91) de l'élément allongé (1) met en prise l'autre formation des formations complémentaires interchangeables (32, 92) sur l'extrémité (3) adjacente de l'un des autres éléments allongés (1) similaires, et l'autre formation complémentaire interchangeable (32, 92) de l'élément allongé (1) met en prise la languette (30, 91) sur l'extrémité (2) adjacente de l'autre des autres éléments allongés (1) similaires.

10. Procédé selon la revendication 9, **caractérisé en ce que** l'autre formation complémentaire interchangeable (32, 92) de l'élément allongé (1) comprend une rainure (32) s'étendant dans l'élément allongé à partir de l'extrémité (3) de l'élément allongé (1) opposée à son extrémité (2) à partir de laquelle la languette (30, 91) s'étend.

11. Procédé selon la revendication 10, **caractérisé en ce que** la rainure (32) s'étend dans l'élément allongé (1) et s'étend de manière transversale.

12. Procédé selon la revendication 9 ou 10, **caractérisé en ce que** la rainure (32) est formée dans l'élément allongé (1) avant de former la languette (30, 91) de l'élément allongé.

13. Procédé selon la revendication 9, **caractérisé en ce que** l'autre formation complémentaire interchangeable (32, 92) de l'élément allongé (1) comprend un évidement (92) s'étendant dans l'élément allongé (1) à partir de sa première surface majeure principale (6) adjacente à l'extrémité (3) de l'élément allongé (1) opposée à son extrémité (2) à partir de laquelle la languette (30, 91) s'étend.
